# FASCICULE DE BREVET EUROPEEN

(11) **EP 2 024 128 B1**
(45) Date de publication et mention de la délivrance du brevet: **19.12.2012**
(21) Numéro de dépôt: 07766064.5
(22) Date de dépôt: 16.05.2007
(51) Int. Cl.: B23K 11/31

(54) **PINCE A ENSERRER DES TOLES, UTILISEE EN ASSOCIATION AVEC UN BRAS MANIPULATEUR**
IN KOMBINATION MIT EINEM MANIPULATORARM VERWENDETER GREIFER FÜR KLEMMPLATTEN
GRIPPER FOR CLAMPING PLATES, USED IN COMBINATION WITH A MANIPULATOR ARM

(30) Priorité: 16.05.2006 FR 0604384
(43) Date de publication de la demande: 18.02.2009
(60) Demande divisionnaire: 12161609.8
(73) Titulaire: ARO Welding Technologies, 72500 Château-du-Loir (FR)
(72) Inventeur: CHEVASSU, Daniel, F-72500 Chateau Du Loir (FR); TIBERGHIEN, Olivier, F-37540 Saint Cyr Sur Loire (FR); BOYER, Jean-Noël, F-37390 Mettray (FR)
(74) Mandataire: Cabinet Plasseraud
(86) Numéro de dépôt international: PCT/FR2007/051290
(87) Numéro de publication internationale: WO 2007/132132

(56) Documents cités:
- DE-A1- 19 801 652
- US-A1- 2002 125 219

## Description

La présente invention concerne tout type de pinces destinées à enserrer des tôles et utilisées en association avec un bras manipulateur, dit robot. Ledit robot peut servir soit à déplacer l'outil autour de l'assemblage à réaliser ou inversement à déplacer l'assemblage devant l'outil, lui-même alors fixé à un pied rigide.

Plus particulièrement, cette invention concerne les pinces à souder par résistance électrique, du type général comprenant un bâti rigide, lié à un support tel que pied rigide ou robot manipulateur, un sous-ensemble mobile, lié au bâti et comportant lui-même une première électrode de soudage, dite fixe, solidaire d'un premier bras, dit fixe, une seconde électrode de soudage, dite mobile, solidaire d'un second bras, dit mobile, et un actionneur de soudage, prenant appui sur ledit bras fixe pour déplacer le bras et l'électrode mobiles par rapport au bras et à l'électrode fixes, suivant un premier degré de liberté, en translation ou en rotation, afin de fermer ou d'ouvrir la pince pour respectivement, enserrer un assemblage de tôles à souder entre les électrodes (rapprochées l'une de l'autre par l'actionneur) ou libérer l'assemblage de tôles (en écartant les électrodes l'une de l'autre par l'actionneur), la pince comportant également un module d'équilibrage, introduisant un degré de liberté supplémentaire, en translation ou rotation, entre ledit support d'une part, et, d'autre part, un ensemble intégrant ledit sous-ensemble mobile, afin d'équilibrer les efforts exercés sur les électrodes en position de fermeture, notamment. Une pince de ce type est décrite dans le document DE-A-198 01652.

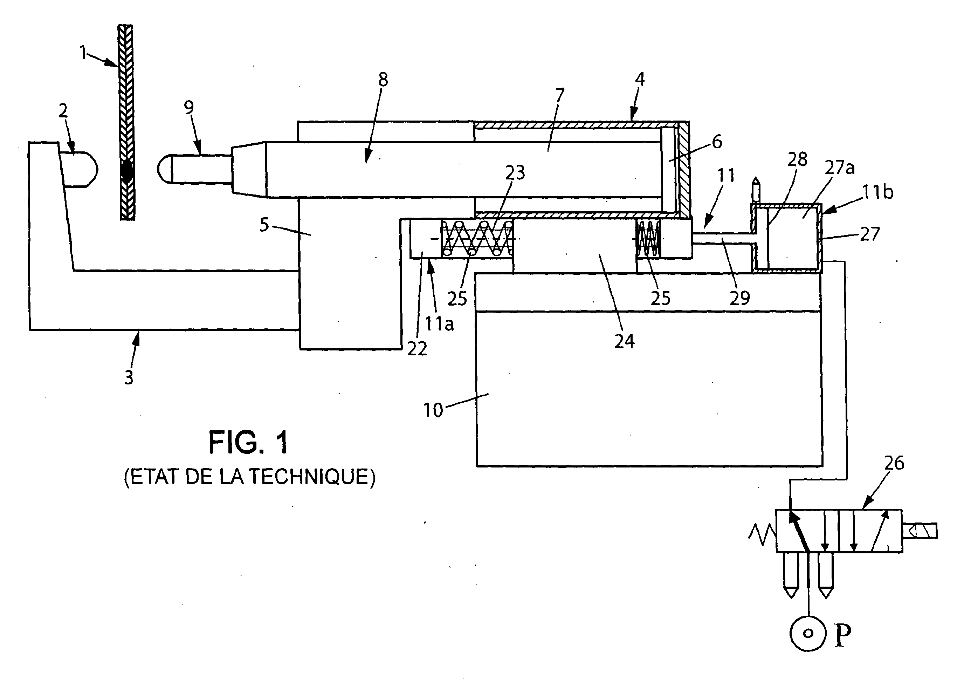

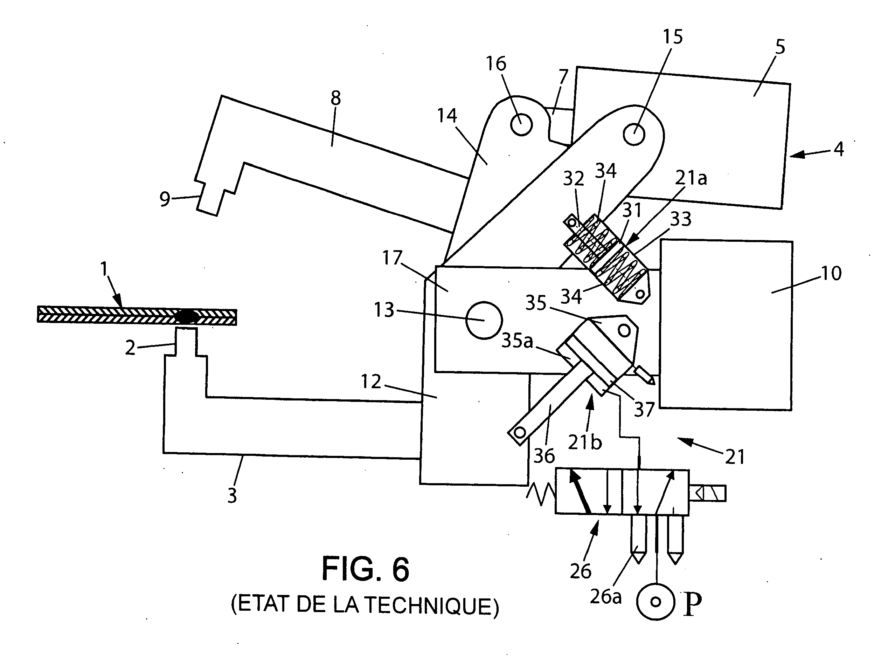

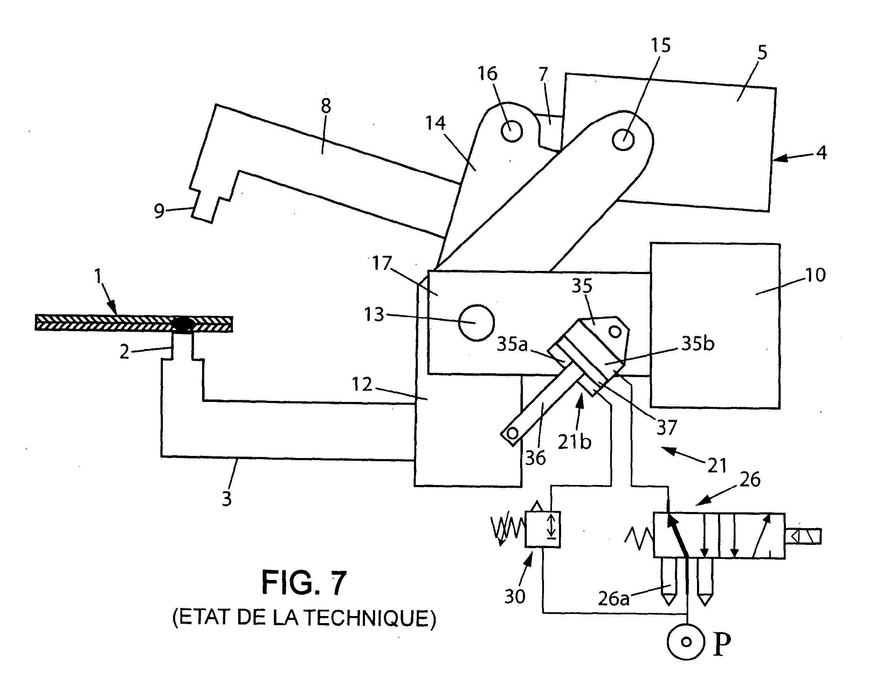

Sur les pinces à souder par résistance électrique de l'état de la technique, selon le travail à réaliser, deux cinématiques sont possibles pour le bras et l'électrode mobiles :
- le premier degré de liberté est une translation du bras et de l'électrode mobiles par rapport au bras fixe portant l'électrode fixe, par un guidage linéaire assuré par l'actionneur de soudage, qui est un actionneur linéaire de tout type convenable connu, hydraulique, pneumatique, mécanique ou électrique, qui déplace directement le bras et l'électrode mobiles, la pince étant alors dite en C ou en J, comme représentée sur les figures 1 à 5 annexées, ou
- le second degré de liberté est une rotation du bras et de l'électrode mobiles, autour d'un axe sur le bâti, par rapport au bras fixe portant l'électrode fixe, la pince étant alors dite en X ou en ciseaux, l'actionneur de soudage pouvant encore être un actionneur linéaire, soit monté pivotant par son corps sur le support de bras fixe autour d'un axe parallèle à l'axe d'articulation du bras et de l'électrode mobiles, soit fixé de façon rigide sur ce même support de bras fixe, une liaison mécanique adéquate à 2 degrés de liberté permettant alors à la tige du vérin se déplaçant linéairement suivant une direction donnée de suivre les mouvements de basculement du bras mobile autour de l'axe d'articulation. L'effort de pivotement du bras et de l'électrode mobiles est transmis de l'actionneur au bras mobile par un levier, dont le bras mobile est solidaire, pivotant autour de l'axe d'articulation, et sur lequel pivote l'extrémité de la tige de l'actionneur, comme représenté sur les figures 6 et 7 annexées.

Sur les figures 1 à 7, les mêmes références désignent des composants identiques ou analogues sur les pinces en C et en X représentées dans différentes positions décrites ci-dessous.

Pour assurer le soudage électrique par points d'un assemblage de tôles 1, les pinces en C des figures 1 à 5 comprennent principalement une électrode fixe 2 montée à l'extrémité d'un bras fixe 3 solidaire du corps 5 d'un actionneur de soudage 4, par exemple de type vérin pneumatique, dont le piston 6 et la tige 7 sont solidaires en déplacement d'un bras mobile 8, dans le prolongement de la tige 7, et dont l'extrémité libre supporte une électrode mobile 9, ces composants constituant un sous-ensemble monté mobile, selon un degré de liberté supplémentaire qui, sur ces figures, correspond également à une translation, sur un bâti 10 rigidement fixé à un support, qui peut être un robot manipulateur ou un pied rigide, ce degré de liberté supplémentaire du sous-ensemble (2-9) par rapport au bâti 10 étant procuré par un module 11 décrit ci-dessous.

De même, sur les pinces en X des figures 6 et 7, l'électrode fixe 2 et le bras fixe 3 sont solidaires d'un support de bras rigide 12 monté sur un axe de pivot 13 autour duquel pivote un levier rigide 14 supportant le bras mobile 8 et l'électrode mobile 9, l'actionneur de soudage 4, également linéaire, étant pivotant par son corps 5 sur le support 12 autour d'un axe 15 parallèle à l'axe 13, tandis que l'extrémité libre de la tige 7 de l'actionneur 4 actionne le levier 14, sur lequel la tige 7 pivote autour d'un axe 16 également parallèle à l'axe 13, de sorte à commander les pivotements du bras 8 et de l'électrode 9 mobiles par rapport au bras 3 et à l'électrode 2 fixes par rotation autour de l'axe 13 supporté par une console rigide 17 du bâti 10 de l'outil, fixé rigidement au support d'outil (pied fixe ou robot manipulateur).

Un degré de liberté supplémentaire, qui est une rotation, est donné au sous-ensemble des bras (3, 8) et électrodes (2, 9) fixes et mobiles et de l'actionneur 4 de soudage par rapport au bâti 10 par pivotement de ce sous-ensemble avec le support de bras 12 et le levier 14 pivotant autour de l'axe 13 grâce à un module 21, dont la structure et les fonctions sont décrites ci-dessous.

Lorsque le procédé d'assemblage par soudage, qui peut débuter lorsque les tôles 1 sont enserrées entre les électrodes 2 et 9, est automatisé, la pince ou l'assemblage des tôles 1 à souder est porté (e) à l'extrémité d'un bras articulé d'un robot manipulateur. Mais, dans le mode le plus habituel de mise en oeuvre du procédé de soudage, comme décrit ci-dessous, la pince est transportée par le robot et positionnée devant l'assemblage de tôles 1, la problématique étant la même dans le cas inverse où l'assemblage de tôles 1 est transporté et positionné devant la pince.

Suivant la programmation de trajectoire, le robot vient positionner l'électrode fixe 2 de la pince devant l'assemblage de tôles 1 à souder. Toutefois, pour des raisons techniques liées à :
- la précision de positionnement du robot ;
- l'incertitude sur la géométrie de la pince (tolérances d'usinage et de montage de ses composants, usure éventuelle des électrodes 2 et 9 lors du procédé);et,
- l'erreur quant à la position réelle de l'assemblage de tôles 1 par rapport à sa position théorique,
il est nécessaire, lors de la programmation du robot, de prévoir une certaine distance entre la position théorique de l'électrode fixe 2 au bout du bras fixe 3 et la position théorique de l'assemblage de tôles 1.

Cette distance doit permettre, pendant les phases dynamiques de déplacement du robot, de garantir toute absence de contact entre l'électrode 2 du bras fixe 3 et l'assemblage de tôles 1, afin d'éviter tout frottement et/ou appui de cette électrode 2 sur les tôles 1 provoquant des marquages, rayures ou déformations des tôles 1.

En pratique, dans le cas d'un procédé de soudage par résistance, la valeur de cette distance est comprise entre environ 5 et environ 15 mm et est appelée course de détalonnage.

A la suite de cette phase de positionnement de la pince par rapport à l'assemblage de tôles 1, le degré de liberté supplémentaire mentionné ci-dessus est libéré sur la pince, de sorte que le sous-ensemble mobile intégrant les électrodes et bras fixes et mobiles (2, 3, 8 et 9) et l'actionneur de soudage 4 peut alors effectuer un mouvement relatif par rapport à son bâti 10, ce mouvement relatif, autorisé par le module 11 ou 21 précité, pouvant être une translation, parallèle à celle du bras mobile 8, comme sur les pinces en C des figures 1 à 5, ou une rotation autour de l'axe 13, comme sur les pinces en X des figures 6 et 7, cette opération, dénommée opération d'accostage, ayant pour but de permettre à l'électrode 2 du bras fixe 3 de venir au contact de l'assemblage de tôles 1 à souder.

Idéalement, ce mouvement d'accostage doit être réalisé complètement, sans pour autant entraîner un effort ou un choc susceptible de déformer les tôles 1, alors que ce mouvement doit être assuré sans connaître avec exactitude l'écart entre les positions théorique et réelle de l'assemblage de tôles 1 et de l'électrode fixe 2, pour différentes masses de la pince et différentes positions de son centre de gravité, et quelque soit l'inclinaison de la pince dans l'espace.

A la suite de cette opération d'accostage, l'actionneur de soudage 4 est commandé et déplace le bras mobile 8 de sorte que l'électrode mobile 9 vient se refermer vers l'électrode fixe 2 en enserrant, entre les deux électrodes 2 et 9, l'assemblage de tôles 1. Après l'entrée en contact de l'electrode mobile 9 avec les tôles 1, il se déroule une phase d'application et de montée de l'effort de soudage.
Or, lors d'une fermeture à vide de la pince (en l'absence de tôles 1), la position du point de contact entre les électrodes fixe 2 et mobile 9 vient dériver en fonction de la différence de flexibilité entre le bras fixe 3 et le bras mobile 8, l'importance de cette dérive ou déplacement étant directement proportionnelle à la valeur de l'effort appliqué.

En conséquence, pour éviter toute déformation des tôles 1, il est nécessaire que la position de la pince (de ses électrodes 2 et 9) soit corrigée tout au long de la phase de montée de l'effort, de sorte que le point de contact entre les électrodes 2 et 9 corresponde en permanence à la position réelle de l'assemblage de tôles 1, cette opération étant dénommée opération d'équilibrage ou de centrage de la pince sur l'assemblage de tôles 1.

De même que pour l'opération d'accostage, pour une pince d'une masse définie, cette opération d'équilibrage doit idéalement pouvoir être assurée de façon autonome et avec la même qualité pour toutes les inclinaisons de la pince dans l'espace.

D'une manière générale, lorsque le point naturel de contact entre les électrodes 2 et 9 se trouve déplacé du côté du bras fixe 3, on parle de sous-accostage, et, inversement, lorsque ce point naturel de contact est déplace du côté du bras mobile 8, on parle de sur-accostage.

Les conséquences d'une opération d'accostage et/ou d'une opération d'équilibrage pas assurée(s) ou mal assurée(s) sont un risque de produire une déformation des tôles 1 qui deviendrait irréversible du fait du dépassement de la contrainte de limite élastique de ces mêmes tôles ou encore une fois l'assemblage par soudage réalisé, et un déséquilibre d'effort entre les deux électrodes 2 et 9 (perte d'effort sur le bras fixe 3 en cas de sur-accostage, augmentation de l'effort en cas de sous-accostage) qui provoque une dégradation de la qualité du procédé d'assemblage. En effet, l'importance de la déformation des tôles 1 par rapport au déséquilibre d'effort entre les deux électrodes 2 et 9 est fonction de la rigidité de l'assemblage et de la position des moyens de préhension.

Enfin, à la suite des opérations d'accostage et d'équilibrage, il est nécessaire d'effectuer une opération de retour et maintien de la pince en position de référence, dénommée opération de détalonnage, idéalement d'une façon également autonome, sans réglage et pour toutes les orientations de la pince dans l'espace. Dans la position dite détalonnée, les deux électrodes 2 et 9 sont écartées de l'assemblage de tôles 1, dans une position initiale à partir de laquelle l'opération d'accostage, pour le point de soudure suivant, peut être commandée.

Comme indiqué précédemment, dans les cas d'application où la pince est fixée sur un support et l'assemblage de tôles 1 à souder transporté par un robot manipulateur, la problématique reste la même, avec toujours la nécessité d'opérations d'accostage et d'équilibrage de la pince sur l'assemblage de tôles 1, puis de détalonnage (retour en position de référence), seule l'inclinaison de la pince, dans ce cas, n'étant plus une variable.

Dans les pinces de soudage par résistance de l'état de la technique, selon les figures 1 à 7, les opérations d'accostage, d'équilibrage et de détalonnage sont rendues possibles grâce au degré de liberté supplémentaire, par translation du sous-ensemble mobile (2, 3, 4, 8, 9) par rapport au bâti 10 sur les pinces en C, ou par basculement (rotation) du sous-ensemble mobile autour d'un axe 13 du bâti 10 sur les pinces en X, et sont assurées grâce au module 11 ou 21, respectivement dans les types de pinces en C. ou en X, qui comprend essentiellement au moins une cassette 11a ou 21a de guidage en translation, complétée, éventuellement, par des ressorts d'équilibrage, et au moins un actionneur 11b ou 21b d'accostage, de détalonnage et de blocage et maintien du sous-ensemble mobile en position détalonnée, cet actionneur 11b ou 21b pouvant présenter, lorsque la cassette de guidage ne comporte pas de ressort d'équilibrage, au moins deux moyens élastiques d'équilibrage sollicitant de manière antagoniste au moins un organe de cet actionneur qui est solidaire en déplacement de ladite cassette, par exemple un actionneur pneumatique à deux chambres de gaz sous pression de part et d'autre d'un piston relié rigidement par la tige de l'actionneur à un coulisseau monté coulissant en translation dans la cassette, afin de réaliser deux moyens élastiques antagonistes d'équilibrage.

Dans les modules d'équilibrage 11 des figures 1 à 5 et 21 des figures 6 et 7, les fonctions d'accostage et de détalonnage sont associées à la fonction d'équilibrage, et les moyens de mise en oeuvre de ces trois fonctions sont combinés, et permettent soit un mouvement linéaire du sous-ensemble mobile, encore appelé chariot, comprenant les deux bras 3, 8, les deux électrodes 2, 9 et l'actionneur de soudage 4, par rapport au bâti 10 rigidement fixé au support (voir figures 1 à 5), soit un mouvement de rotation du sous-ensemble mobile par rapport au bâti 10 (voir figures 6 et 7).

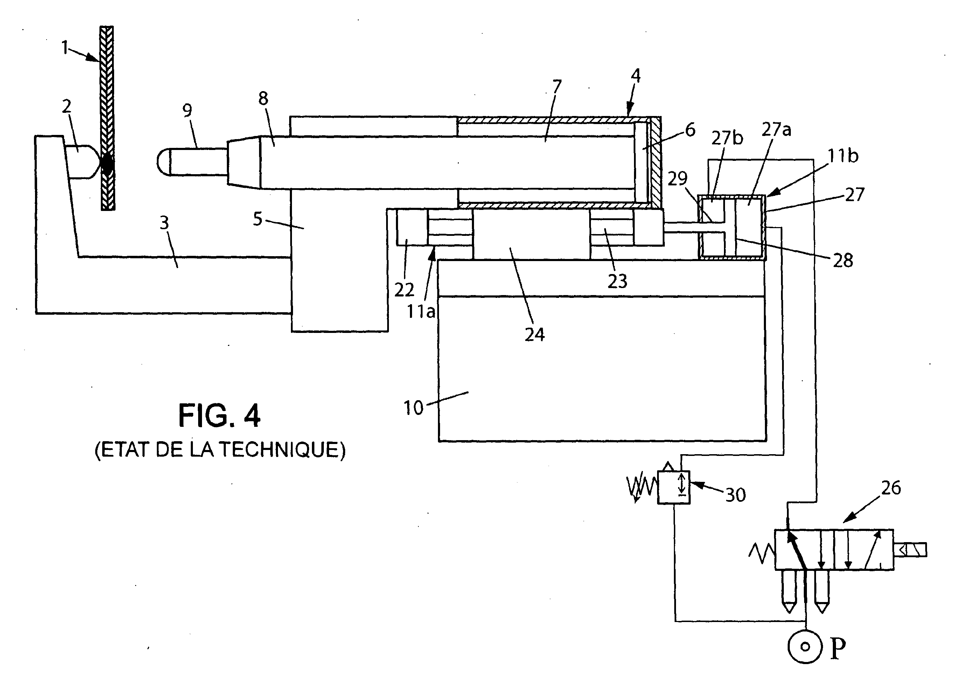

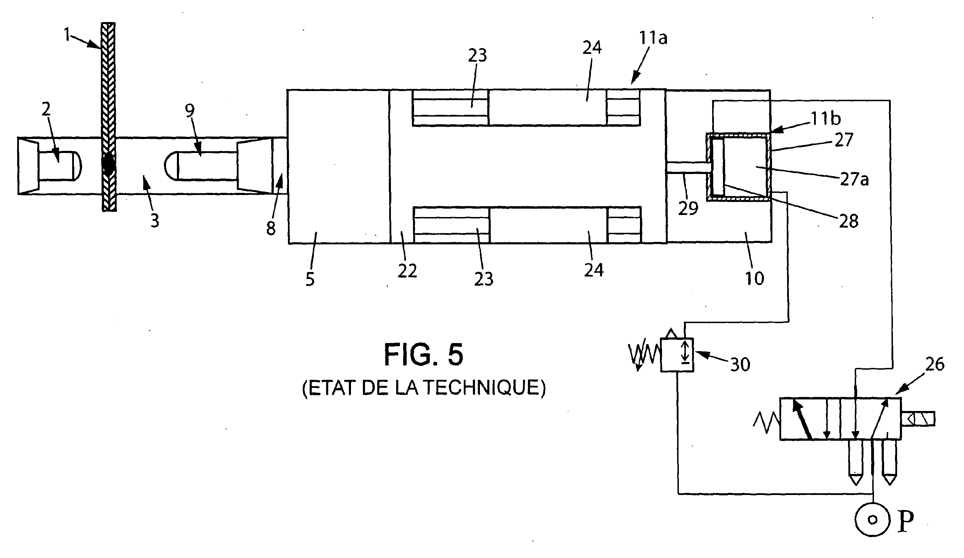

Sur les figures 1 à 7, chacun des modules d'équilibrage 11 et 21 comprend une cassette de guidage linéaire 11a ou 21a, remplissant éventuellement la fonction supplémentaire d'accostage et d'équilibrage par des ressorts antagonistes, et un actionneur linéaire de détalonnage 11b ou 21b, remplissant éventuellement en plus la fonction d'accostage et d'équilibrage si la cassette 11a ou 21a est dépourvue de ressort d'équilibrage (figure 4 et 5) ou n'est pas présente (figure 7).

Lorsque les trois fonctions combinées sont réalisées par des mouvements de basculement (rotation) du sous-ensemble mobile par rapport au bâti 10, les moyens de mise en oeuvre peuvent être transposés à partir de ceux mentionnés ci-dessus et comprendre au moins un actionneur rotatif d'accostage et de détalonnage ainsi qu'au moins une cassette de guidage en rotation et éventuellement d'équilibrage par au moins deux ressorts de torsion antagonistes.

Sur les figures 1 à 3, la pince en C de l'état de la technique a son module 11 d'équilibrage, accostage et détalonnage constitué d'une cassette 11a de guidage en translation, d'accostage et d'équilibrage à ressorts, et d'un actionneur 11b de détalonnage qui est un actionneur à simple effet, généralement pneumatique ou hydraulique.

La cassette 11a comporte un corps rigide rectangulaire 22, dans chacun des deux grands côtés opposés duquel est ménagé l'un respectivement de deux évidements identiques, traversés longitudinalement chacun par l'une respectivement de deux colonnes de guidage 23, identiques, espacées, parallèles entre elles et aux grands côtés du corps 22, fixées au corps 22 par leur deux extrémités, et montées coulissantes chacune dans l'un respectivement de deux coulisseaux ou manchons tubulaires identiques 24, parallèles et solidaires du bâti 10, tandis que le corps 22 est fixé rigidement sous le corps 5 de l'actionneur de soudage 4.

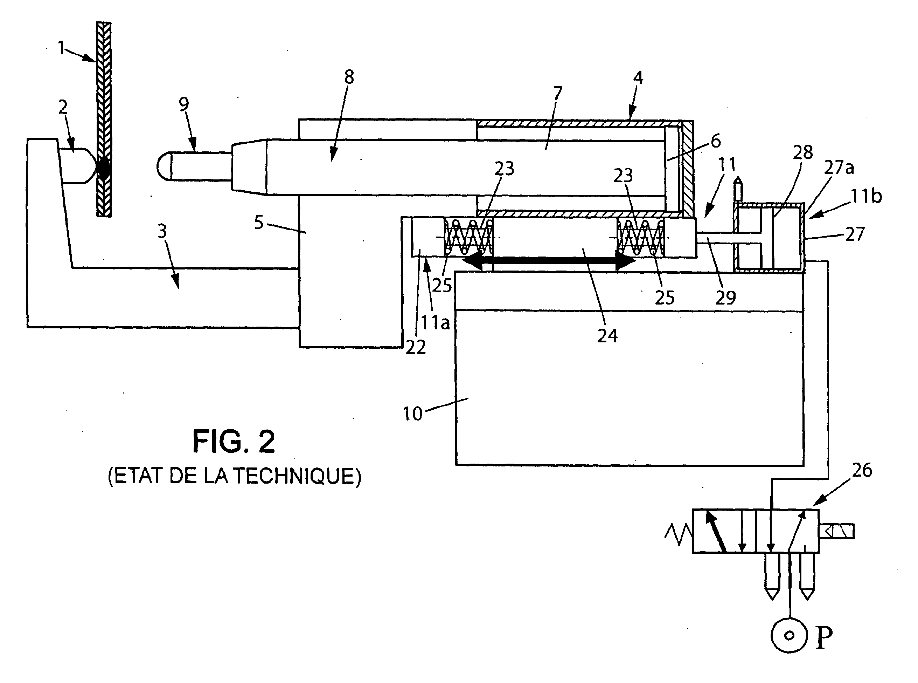

Les deux parties d'extrémité axiales opposées de chaque colonne 23 qui ressortent de part et d'autre du manchon 24 correspondant sont entourées chacune par l'un respectivement de deux ressorts hélicoïdaux 25, identiques et antagonistes, prenant appui par une extrémité axiale sur le corps 22, à l'extrémité correspondante de l'évidement correspondant, et par l'autre extrémité axiale sur l'extrémité axiale correspondante du manchon 24 correspondant. Ainsi, quatre ressorts d'équilibrage 25 prennent appui sur les manchons 24 rigidement fixés au bâti 10 pour solliciter le corps 22 de la cassette 11a, et donc aussi le sous-ensemble mobile qui lui est rigidement lié, axialement d'un côté ou de l'autre, pour équilibrer la pince, après que le sous-ensemble mobile (2, 3, 4, 8, 9) a été translaté suite au mouvement d'accostage de la position détalonnée (initiale de référence) de la figure 1 à la position d'équilibrage de la figure 2, par inversion des deux positions du distributeur fluidique de commande 26, interposé entre l'actionneur 11b d'une part, et,d'autre part, une conduite d'alimentation en fluide sous pression et une conduite de retour de fluide.

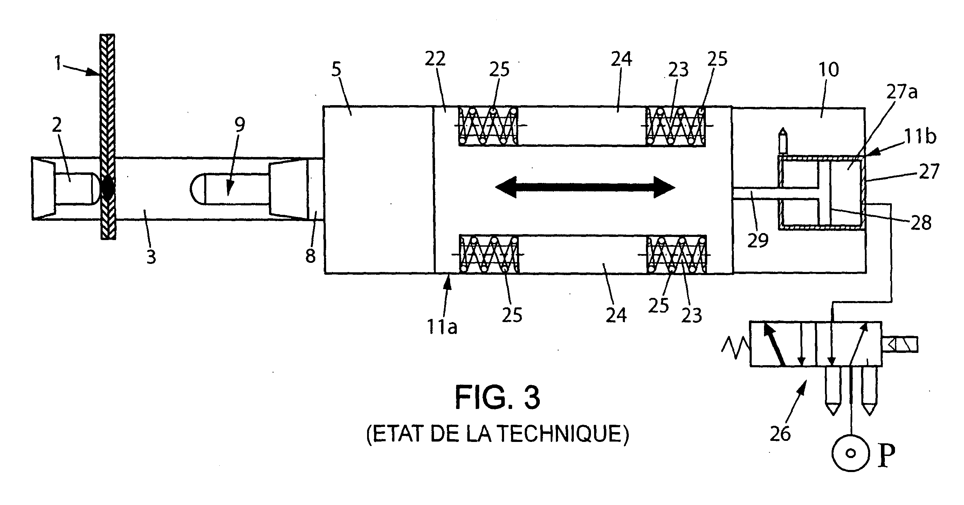

Initialement, le sous-ensemble mobile a été amené en position détalonnée (figure 1), dans laquelle l'électrode fixe 2 est écartée des tôles 1, par admission de fluide sous pression dans la chambre de travail 27a délimitée dans le cylindre 27 de l'actionneur 11b par le piston 28 qui est solidaire par la tige 29 du corps 22 de cassette 11a, jusqu'à amener le piston 28 en butée contre le cylindre 27. Ce déplacement du piston 28 et de la tige 29 entraîne la translation de l'ensemble du corps 22 de cassette 11a avec le sous-ensemble mobile (2,3,4,8,9) dans le sens qui comprime les ressorts 25 à droite des manchons 24 et détend les ressorts 25 à gauche des manchons 24. Le sous-ensemble mobile est alors lié de façon rigide au bâti 10 et la pince se trouve en position de référence, dite détalonnée. L'inversion du distributeur 26 commande l'accostage de l'électrode fixe 2 contre les tôles 1 par la vidange de la chambre de travail 27a précédemment sous pression dans l'actionneur 11b, sous l'effet de la détente des ressorts 25 préalablement comprimés, entraînant la translation en sens opposé du corps 22 de cassette 11a avec le sous-ensemble mobile (2,3,4,8,9), ainsi libéré de sa butée, jusquà ce que le sous-ensemble mobile et le corps 22 de la cassette 11a se trouvent en équilibre entre les deux paires de ressorts 25 antagonistes (voir figures 2 et 3).

La course de l'opération d'accostage dépend de la raideur et de la tension des ressorts 25, de la masse et de l'inclinaison de la charge à équilibrer, et des frottements éventuels pouvant freiner le déplacement de la charge. Lorsque la position d'équilibre a été atteinte, le sous-ensemble mobile conserve une certaine souplesse axiale, grâce aux ressorts 25.

Dans cet exemple, le cylindre 27 de l'actionneur 11b est rigidement fixé, comme les manchons 24, au bâti 10, et le corps 22 de la cassette 11a est rigidement fixé au sous-ensemble mobile. En variante, les manchons 24 peuvent être solidaires du sous-ensemble mobile, et le corps de cassette 22 solidaire du bâti 10, auquel cas la tige 29 du piston 28 de l'actionneur 11b entraîne les manchons 24 en traversant le corps 22. En variante encore, le cylindre 27 de l'actionneur 11b peut être solidaire de celui du ou des éléments, parmi le corps 22 et les manchons 24, qui est ou sont solidaire(s) du sous-ensemble mobile, auquel cas la tige 29 du piston 28 prend appui sur l'autre ou les autres des éléments précités qui est ou sont solidaires du bâti 10, pour déplacer le sous-ensemble mobile en translation par rapport au bâti 10, contre l'action ou sous l'action des ressorts 25.

Sur la variante de pince en C des figures 4 et 5, la cassette 11a ne diffère de celle des figures 1 à 3 que par l'absence des ressorts 25, de sorte qu'elle ne remplit pas la fonction d'accostage et d'équilibrage élastique, mais uniquement celle de guidage en translation du sous-ensemble mobile par rapport au bâti 10 grâce aux colonnes 23 et aux manchons-coulisseaux 24.

La fonction d'accostage et d'équilibrage est assurée par l'actionneur 11b de détalonnage, qui est un vérin pneumatique à double effet, dont le cylindre 27 est solidaire du bâti 10 et la tige 29 du piston 28 solidaire du corps de cassette 22, lui-même solidaire du corps 5 de l'actionneur de soudage 4. La commande pneumatique est assurée par le distributeur à deux positions 26 coopérant avec une vanne de régulation 30 permettant de piloter ou bloquer l'alimentation ou la vidange de l'une 27a des deux chambres de travail 27a et 27b de l'actionneur 11b (chambre de droite sur les figures 4 et 5) en air comprimé, qui est vidangé de l'autre chambre de travail 27b ou alimenté vers cette autre chambre 27b au travers du distributeur 26.

Dans un premier temps, la chambre 27a du vérin 11b est alimentée, tandis que la chambre 27b est vidangé au travers du distributeur 26 de façon à repousser le piston 28 en butée contre le cylindre 27, et donc, par la tige 29, le sous-ensemble mobile en position de détalonnage (position de référence en butée par rapport au bâti 10) de sorte que ce sous-ensemble mobile est alors lié de façon rigide au bâti 10 (figure 5), l'électrode fixe 2 étant écartée des tôles 1. La vanne 30 permet d'isoler l'actionneur pneumatique 11b dans cette position, pour maintenir la pince dans cette position détalonnée.

Puis les opération d'accostage et d'équilibrage sont réalisées en commandant l'inversion du distributeur 26 afin de remettre sous pression la chambre 27b et en régulant grâce à la vanne 30 la différence de pression entre les deux chambres 27a et 27b du vérin 11b, de façon à déplacer le piston 28 et la tige 29, et donc le sous-ensemble mobile, de sorte à amener l'électrode fixe 2 en contact avec les tôles 1 (accostage) et de façon à compenser l'effet de la masse de la charge (équilibrage - voir figure 4).

Grâce à la régulation de la différence de pression entre les chambres 27a et 27b et à la différence de surface active entre les 2 faces opposées du piston 28 liée à la présence de la tige 29, la pince est équilibrée de façon fine sur toute la course nécessaire à l'opération d'accostage. En utilisant, comme distributeur 26 et vanne de régulation 30, au moins un régulateur à commande proportionnelle, l'opération d'équilibrage peut être réalisée pour toutes les orientations de la pince dans l'espace au cours de la mise en oeuvre du procédé de soudage.

L'accostage, l'équilibrage et le détalonnage sont donc pneumatiques sur cette variante de pince en C.

Dans cette dernière variante, les deux chambres 27a et 27b de gaz sous pression de part et d'autre du piston 28 relié rigidement par la tige 29 au corps de cassette 22, et donc au sous-ensemble mobile, réalisent les deux moyens élastiques antagonistes d'équilibrage.

De manière analogue, les variantes de pince en X des figures 6 et 7 se distinguent l'une de l'autre en ce que la pince de la figure 6 bénéficie d'un équilibrage à ressorts par la cassette de guidage 21a du module 21 réalisant également la fonction d'accostage, alors que les fonctions de détalonnage sont assurées par l'actionneur 21b de type vérin à simple effet, pneumatique ou hydraulique, tandis que sur la pince de la figure 7, le module d'équilibrage 21 ne comprend pas de cassette de guidage, mais uniquement un actionneur 21b du type vérin à double effet, pneumatique, remplissant les fonctions d'accostage, d'équilibrage, et de détalonnage de la pince.

Sur la figure 6, la cassette de guidage et d'équilibrage 21a comprend un piston 31, solidaire d'une tige 32 montée pivotante sur le support de bras 12 autour d'un axe parallèle à l'axe de rotation 13, et le piston 31 est monté coulissant dans un cylindre 33 monté pivotant, par son extrémité opposée à celle traversée par la tige 32, sur la console rigide 17 du bâti 10, autour d'un axe également parallèle à l'axe de rotation 13, le cylindre 33 logeant deux ressorts 34 hélicoïdaux et antagonistes prenant chacun appui sur l'une des extrémités du cylindre 33, d'un côté, et de l'autre, contre l'une respectivement des deux faces opposées du piston 31. Ainsi, les deux ressorts 34 assurent l'équilibrage du sous-ensemble mobile en rotation autour de l'axe 13 par rapport au bâti 10, dans les mêmes conditions que les ressorts 25 de la pince en C des figures 1 à 3.

L'actionneur linéaire à simple effet 21b de la pince en X de la figure 6 a son cylindre 35 et sa tige 36 montés pivotants, par leurs extrémités opposées, respectivement sur la console rigide 17 du bâti 10 et sur le support de bras 12, autour d'axes parallèles à l'axe 13, et le piston 37 solidaire de la tige 36 délimite dans le cylindre 35 une chambre de travail 35a (du côté de la tige 36) qui est sélectivement mise en communication, par le même distributeur fluidique 26 à deux positions des figures 1 à 5, avec une alimentation en fluide sous pression ou une conduite de retour de ce fluide, l'alimentation de cette chambre de travail 35a en fluide sous pression permettant de déplacer le piston 37 en butée contre la partie montée pivotante du cylindre 35, ce qui fait pivoter le support de bras 12, et donc le sous-ensemble mobile supporté par ce dernier, en rotation autour de l'axe 13 pour amener et maintenir ce sous-ensemble mobile en position de détalonnage (position initiale de référence) dans laquelle l'électrode fixe 2 est écartée des tôles 1, tandis qu'à l'intérieur de la cassette 21a le piston 31 est tiré vers l'extérieur du cylindre 33 (côté de la tige 32), en comprimant ainsi l'un des ressort 34 et en détendant l'autre. En commandant l'inversion du distributeur de commande 26, la chambre de travail 35a de l'actionneur 21b est mise hors pression grâce à la mise en communication avec un échappement 26a. Sous l'action des ressorts d'équilibrage 34, le piston 31 retrouve une position d'équilibre à l'intérieur de la cassette 21a en faisant pivoter le support de bras 12 par rapport à la console 17 rigide du bâti 10, ce pivotement du support de bras 12 exerçant simultanément une traction sur la tige 36 de l'actionneur 21b, dont le piston 37 est déplacé dans le sens qui tend à réduire le volume de la chambre de travail 35a, et de sorte que l'électrode fixe 2 au bout du bras fixe 3 lié au bras support 12 vienne en contact avec les tôles 1, en position d'accostage et d'équilibrage.

Sur la figure 7, l'équilibrage pneumatique de la pince est assuré par l'actionneur 21b qui est, comme déjà mentionné, un vérin pneumatique à double effet, commandé par le distributeur 26 et la vanne de régulation 30 utilisés dans les mêmes conditions pour assurer l'équilibrage pneumatique de la pince en C des figures 4 et 5. En effet, par la commande du distributeur 26, la chambre 35b de l'actionneur 21b est relié à l'échappement 26a et donc mise hors pression. Le piston 37 vient alors en butée contre l'extrémité pivotante du cylindre 35 ce qui permet de maintenir la pince dans cette position de détalonnage.

Puis, les opération d'accostage et d'équilibrage sont réalisées en commandant l'inversion du distributeur 26 afin de remettre sous pression la chambre 35b et en régulant grâce à la vanne 30 la différence de pression entre les deux chambres de travail 35a et 35b du vérin, de façon à compenser le couple autour de l'axe de rotation 13 créé par la masse et la position du centre de gravité du sous-ensemble mobile, et, comme dans l'exemple de la pince en C des figures 4 et 5, on utilise de préférence au moins un régulateur à commande proportionnelle pour que l'opération d'équilibrage puisse être réalisée avec la même souplesse pour toutes les orientations de la pince dans l'espace, au cours du procédé de soudage.

Ainsi, dans l'état actuel de la technique, sur les pinces en C comme en X, les fonctions de détalonnage d'accostage et d'équilibrage sont remplies par des moyens qui font partie intégrante de la pince, puisque montés entre le sous-ensemble mobile des deux bras, deux électrodes et de l'actionneur de soudage, d'une part, et, d'autre part, le bâti rigidement lié au support de la pince, ces fonctions impliquant, sur la pince, un degré de liberté supplémentaire (s'ajoutant au degré de liberté procuré par l'actionneur de soudage) soit sous la forme d'un mouvement de translation (accostage linéaire) soit d'une rotation partielle (accostage curviligne par basculement autour d'un axe de rotation).

Dans tous les cas, la partie mobile de la pince lors de ces opérations de détalonnage, d'accostage et d'équilibrage est le sous-ensemble comprenant le bras et l'électrode fixe, le bras et l'électrode mobile et l'actionneur de soudage (actionneur principal de fermeture de la pince), mais en aucun cas la pince complète.

L'idée à la base de l'invention est que la fonction d'équilibrage ne soit pas remplie par des moyens faisant partie intégrante de l'outil, mais par des moyens montés à l'extérieur de la pince proprement dite, tout en conservant, pour réaliser l'opération d'équilibrage, les moyens connus à cet effet, tant pneumatiques qu'hydrauliques, électromagnétiques ou électromécaniques, afin de bénéficier des avantages suivants.

La fonction d'équilibrage peut être fournie en tant qu'option, sans surcoût sur la pince de base, ce qui est particulièrement intéressant dans le cas d'applications n'imposant pas la fonction d'équilibrage, comme cela est le cas lorsque l'accostage et le positionnement de l'électrode fixe sur l'assemblage de tôles sont directement assurés par le robot manipulateur. En effet, dans ce cas, il convient de supprimer sur la pince le degré de liberté supplémentaire lié à cette fonction d'équilibrage, car le robot, bénéficiant d'une précision suffisante, est renseigné sur l'évolution de la géométrie de la pince, liée à, notamment, l'usure des électrodes, et la dérive du point de contact entre les électrodes, lors de l'application de l'effort. Grâce à la connaissance de ces valeurs, l'incertitude sur le positionnement relatif des tôles est réduite et le robot peut réaliser de lui-même les opérations d'accostage de la pince sur les tôles, cette solution présentant l'intérêt d'être économique, grâce à la suppression du degré de liberté sur le corps de pince, et d'être opérationnelle indépendamment de l'orientation de la pince dans l'espace.

Un autre avantage de l'invention est que le module d'équilibrage (rassemblant les moyens d'équilibrage) peut être commun et standardisé à toutes les pinces, indépendamment de leur cinématique, en permettant simultanément une importante simplification de la pince de base, grâce à une réduction importante du nombre de pièces.

A cet effet, l'invention propose une pince conforme à la revendication 1.

Ce déport du module d'équilibrage à l'extérieur de l'ensemble du sous-ensemble mobile et du bâti ne gêne en rien le fait que, comme connu sur les pinces à souder par résistance de l'état de la technique, et tel que décrit ci-dessus en référence aux figures 1 à 7, le module d'équilibrage est avantageusement combiné à des moyens d'accostage, permettant d'amener l'extrémité fixe au contact de l'assemblage de tôles*,* par déplacement dudit sous-ensemble mobile après libération dudit degré de liberté supplémentaire, suite à un positionnement initial de la pince ouverte avec un jeu initial entre l'assemblage de tôles et l'extrémité fixe, et/ou à des moyens de détalonnage, permettant de ramener et maintenir le sous-ensemble mobile en position de référence, en butée par rapport audit support, et, avantageusement: sur une pince selon l'invention, le module d'équilibrage est combiné à des moyens d'accostage et à des moyens de détalonnage.

Selon l'invention, le module d'équilibrage peut être monté en interface entre deux parties dudit support, dont une première partie est solidaire dudit bâti et/ou du sous-ensemble mobile et la seconde partie constitue le reste du support ou est solidaire du reste du support.

Dans ce dernier cas, il est avantageux que le module d'équilibrage se fixe sur un flanc du bâti supportant le sous-ensemble mobile et/ou du corps de l'actionneur du sous-ensemble mobile.

Le module d'équilibrage peut, comme les modules d'équilibrage connus de l'état de la technique, autoriser des déplacements en translation ou en rotation du sous-ensemble mobile et de son bâti par rapport au support, en réalisant le module combiné d'équilibrage, d'accostage et de détalonnage en tant que module indépendant fixé sur l'un des côtés de la pince, à l'interface du point de fixation de la pince par son bâti avec le support, du type pied support fixe ou bras manipulateur.

Que le module d'équilibrage autorise des déplacements en translation ou en rotation du sous-ensemble mobile et de son bâti par rapport au support, le module d'équilibrage comprend avantageusement :
- au moins une cassette de guidage du mouvement relatif, selon le degré de liberté supplémentaire, entre le sous-ensemble mobile avec son bâti et le support,
- au moins deux moyens élastiques d'équilibrage sollicitant de manière antagoniste au moins un organe qui est guidé dans ladite cassette de guidage, ou solidaire en déplacement de ladite cassette, et
- au moins un actionneur d'accostage, de détalonnage et de blocage et maintien du sous-ensemble mobile en position détalonnée.

En particulier sur une pince de type en C, à mouvement linéaire du bras mobile par rapport au bras fixe, le module d'équilibrage est avantageusement mis en place de sorte que les déplacements en translation autorisés par ledit module sont sensiblement parallèles aux déplacements du bras mobile, et donc sensiblement perpendiculaires au plan d'assemblage des tôles.

Avantageusement, sur une pince de type en X, à mouvements de rotation du bras mobile par rapport au bras fixe, le module d'équilibrage, qui peut être le même que celui monté sur une pince en C, est mis en place de sorte que les déplacements en translation autorisés par le module sont également sensiblement perpendiculaires au plan d'assemblage des tôles, et donc sensiblement parallèles à la direction des deux électrodes bout à bout en position de fermeture de la pince en X.

Dans une réalisation avantageuse, simplifiant la structure et le montage du module d'équilibrage sur des pinces de l'un ou l'autre des deux types en C et en X, et simultanément simplifiant la réalisation de ces pinces, le module d'équilibrage est monté sur une première face d'une plaque d'interface qui est tournée vers un organe solidaire du support et sur lequel le module prend appui pour déplacer ladite plaque d'interface, qui est solidaire par sa seconde face du bâti et/ou du sous-ensemble mobile. Avantageusement, le module d'équilibrage est apte à se monter sur ladite première face de ladite plaque d'interface, dans l'une ou l'autre d'au moins deux positions autorisant des déplacements en translation sensiblement parallèle à respectivement l'une ou l'autre d'au moins deux directions inclinées entre elles, et de préférence sensiblement perpendiculaires entre elles, dans le plan de ladite première face, selon que la pince est du type en C ou en X, respectivement à déplacements en translation ou en rotation du bras mobile par rapport au bras fixe.

De préférence, dans ce cas, ladite seconde face de la plaque d'interface est équipée de moyens de fixation rigide du bras fixe et de l'actionneur du sous-ensemble mobile.

La pince selon l'invention est avantageusement une pince à souder par résistance et les extrémités respectivement des bras fixe et mobile sont des électrodes de soudage.

Sur une telle pince à souder, comme dans les pinces en C et en X de l'état de la technique, un transformateur de soudage est avantageusement intégré à l'ensemble du sous-ensemble mobile et du bâti, et est solidaire du bâti et/ou du bras fixe.

Dans ce cas, le transformateur de soudage est avantageusement fixé rigidement à ladite seconde face de la plaque d'interface.

Avantageusement, pour que le module d'équilibrage ainsi que la plaque d'interface soient totalement interchangeables entre des pinces en X et des pinces en C, ladite plaque d'interface est en outre percée d'une ouverture de passage aménagée pour la réception d'un axe d'articulation du bras mobile en rotation, de préférence ledit axe d'articulation se montant également dans une plaque de renforcement fixée rigidement entre ledit axe d'articulation et l'actionneur de soudage, sur une pince de type en X.

En outre, lorsqu'un transformateur de soudage est fixé à la seconde face de la plaque d'interface, deux conducteurs électriques sont avantageusement fixés sur la sortie du transformateur de soudage et destinés chacun à l'alimentation électrique de l'un respectivement des deux bras mobile et fixe du sous-ensemble mobile; le conducteur destiné au bras fixe s'étendant de la sortie du transformateur à un manchon de serrage, fixé en saillie sur la seconde face de la plaque d'interface, pour la fixation rigide du bras fixe à ladite plaque d'interface.

Dans un mode de réalisation particulièrement adapté à l'interchangeabilité entre les pinces en C et en X, la pince de l'invention est équipée d'un module dont la cassette de guidage comporte avantageusement un cadre rigide rectangulaire, traversé parallèlement à deux côtés opposés, de préférence les grands côtés, par deux colonnes de guidage fixées de façon rigide à ladite plaque d'interface, espacées et parallèles, et guidées en translation à leurs extrémités sur des paliers solidaires du cadre, au moins une barrette étant fixée solidaire des colonnes et liée elle-même à la tige d'un actionneur linéaire de type vérin, parallèle aux colonnes et s'étendant entre elles, et dont le cylindre est fixé au cadre de la cassette, le cadre étant fixé de façon directe ou au moyen d'un support intermédiaire rigide au bras manipulateur ou à un pied rigide , ou inversement, le cadre étant fixé rigidement à la première face de la plaque d'interface et le sous-ensemble rigide constitué par les colonnes et la ou les barrettes est fixé de façon directe ou au moyen d'un support intermédiaire rigide au bras manipulateur ou à un pied rigide, de sorte que l'actionneur est apte à commander l'accostage et le détalonnage, au moins une colonne de guidage étant entourée de deux ressorts hélicoïdaux antagonistes prenant chacun appui par une extrémité sur le cadre et par l'autre extrémité sur l'une au moins des barrettes, du côté opposé à l'autre ressort, ou ledit actionneur étant pneumatique à deux chambres de gaz sous pression de part et d'autre d'un piston relié rigidement par la tige à l'une au moins des barrettes , afin de réaliser les deux moyens élastiques antagonistes d'équilibrage.

D'autres caractéristiques et avantages de l'invention, ressortiront de la description donnée ci-dessous, à titre non limitatif, d'exemples de réalisations décrits en référence aux dessins annexés, sur lesquels :
- la figure 1 est une vue schématique en partie en coupe axiale et en partie en élévation latérale d'une pince en C de l'état de la technique à module d'équilibrage à ressorts, en position détalonnée ;
- la figure 2 est une vue analogue à la figure 1 représentant la pince en C en position d'accostage/d'équilibrage ;
- la figure 3 est une vue schématique, en partie en plan et en partie en coupe horizontale, de la pince en C dans la même position que sur la figure 2 ;
- la figure 4 est une vue analogue à la figure 2 d'une pince en C de l'état de la technique à module d'équilibrage pneumatique, en position d'accostage/d'équilibrage ;
- la figure 5 est une vue analogue à la figure 3 de la pince en C de la figure 4, en position détalonnée ;
- la figure 6 est une vue analogue à la figure 1 d'une pince en X de l'état de la technique, à module d'équilibrage à ressorts, en position d'accostage/d'équilibrage.
- la figure 7 est une vue analogue à la figure 6 d'une pince en X de l'état de la technique, à module d'équilibrage pneumatique, dans la même position que sur la figure 6 ;

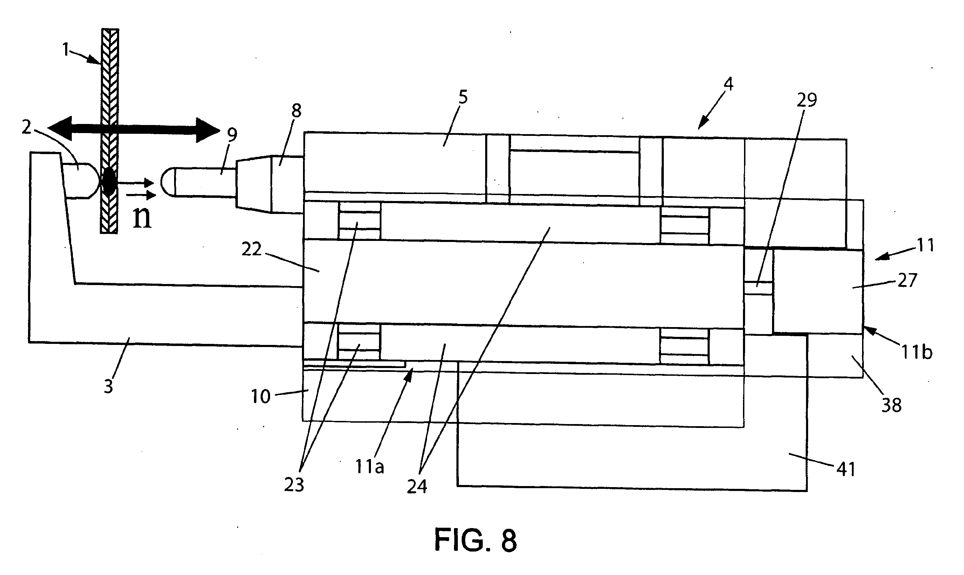

- la figure 8 est une vue schématique, en partie en élévation latérale et en partie en coupe, d'une pince en C avec module d'équilibrage pneumatique, analogue à celle des figures 4 et 5, mais avec mise en place du module d'équilibrage indépendant sur un côté de la pince et avec guidage linéaire parallèle au vecteur *̅n̅*̅ normal au plan d'assemblage des tôles ;

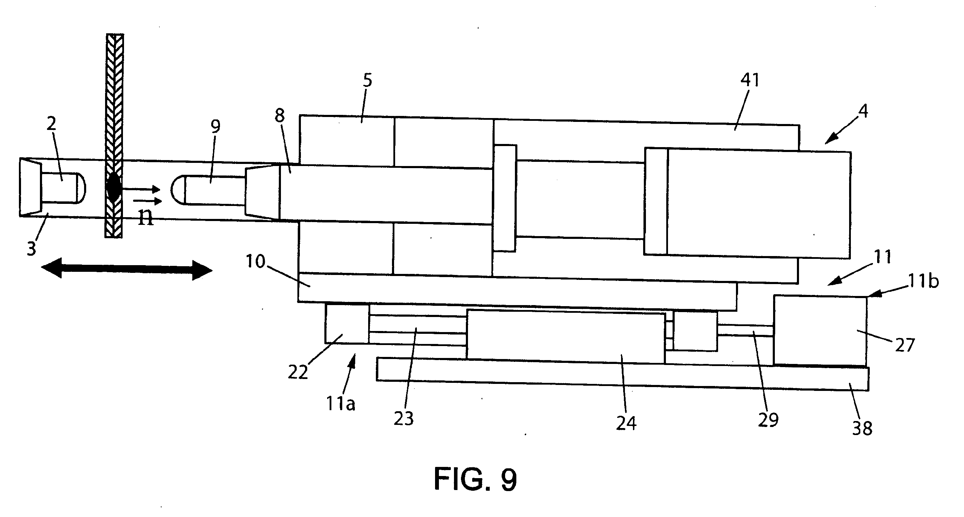

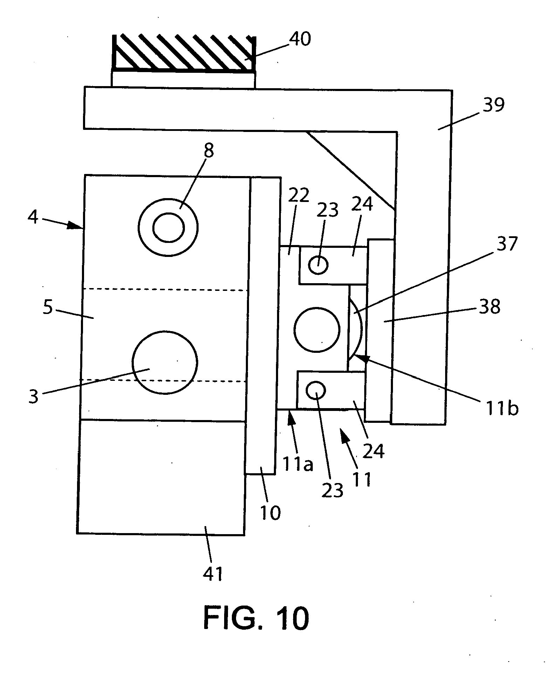

- les figures 9 et 10 sont des vues schématiques respectivement en plan et de face de la pince en C avec module d'équilibrage pneumatique de la figure 8 ;

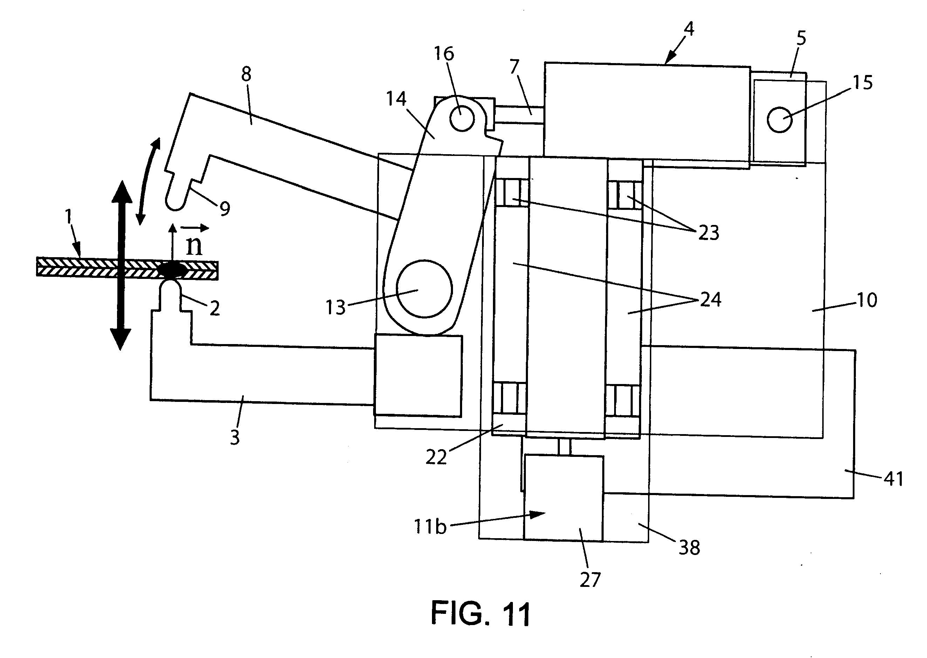

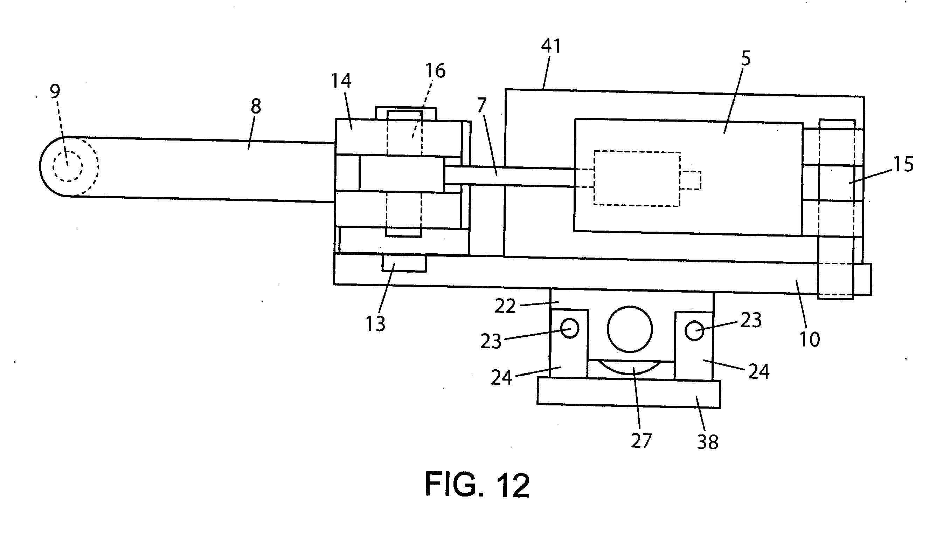

- les figures 11, 12 et 13 sont des vues analogues respectivement aux figures 8, 9 et 10 pour une pince en X, analogue à celle des figure 6 et 7, équipée du même module d'équilibrage pneumatique indépendant que la pince en C des figures 8 à 10, également montée sur l'un des côtés de la pince et avec son guidage linéaire parallèle au vecteur *̅n̅*̅ perpendiculaire au plan d'assemblage des tôles ;

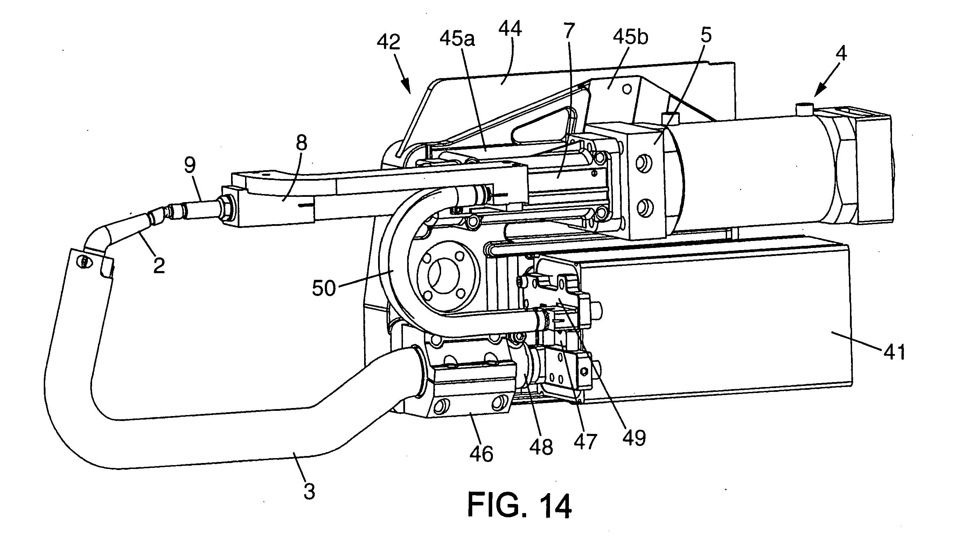

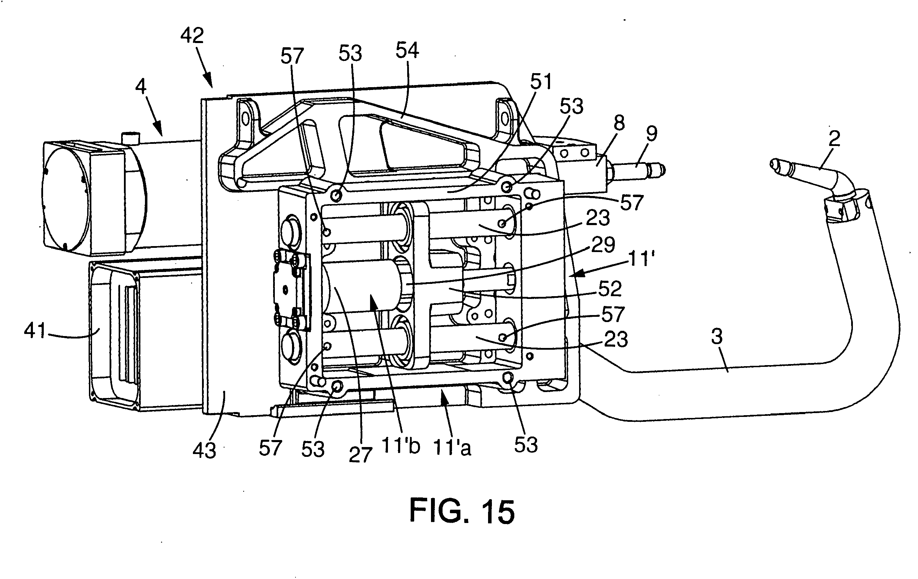

- les figures 14 et 15 sont des vues schématiques en perspective d'une autre pince en C avec une plaque d'interface supportant le module d'équilibrage indépendant correspondant, respectivement du côté de la pince et du côté du module ;

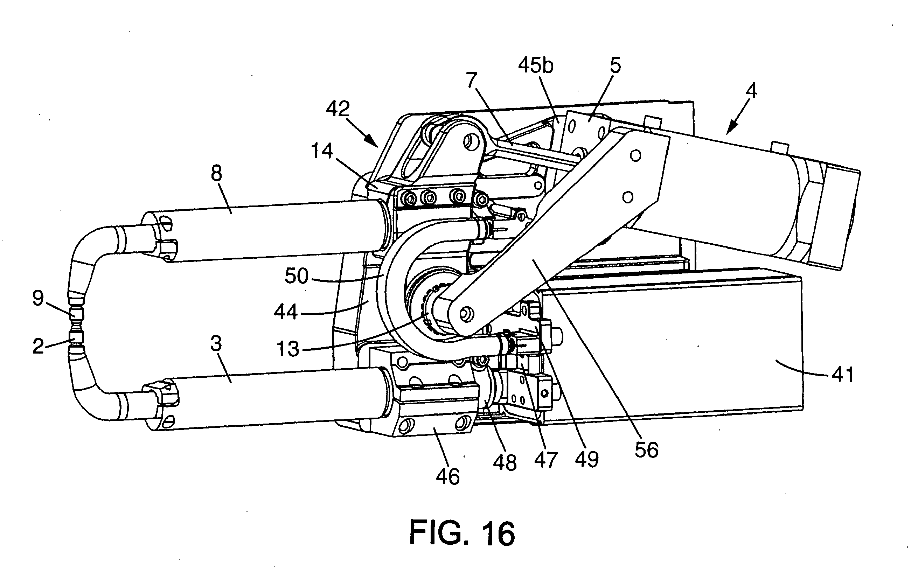

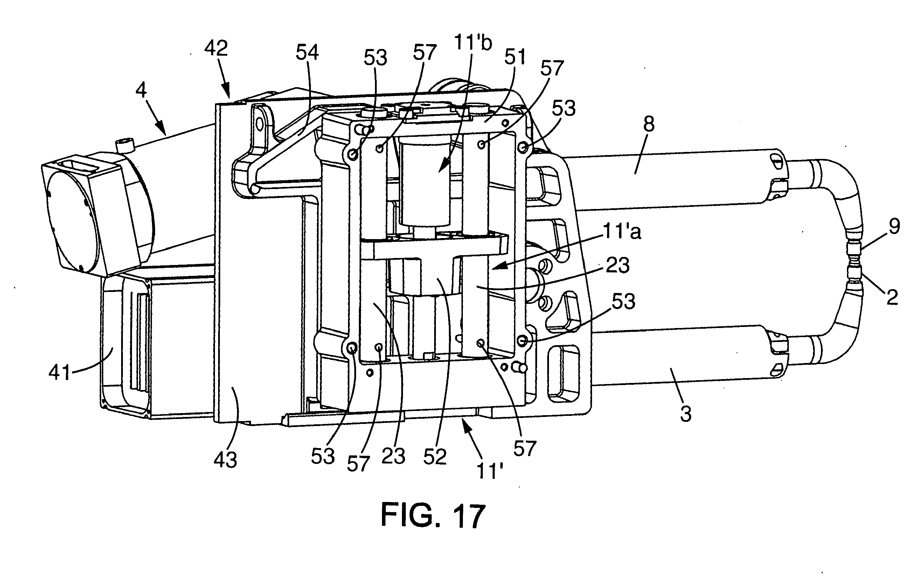

- les figures 16 et 17 sont des vues analogues respectivement aux figures 14 et 15 pour une pince en X avec la même plaque d'interface ; et

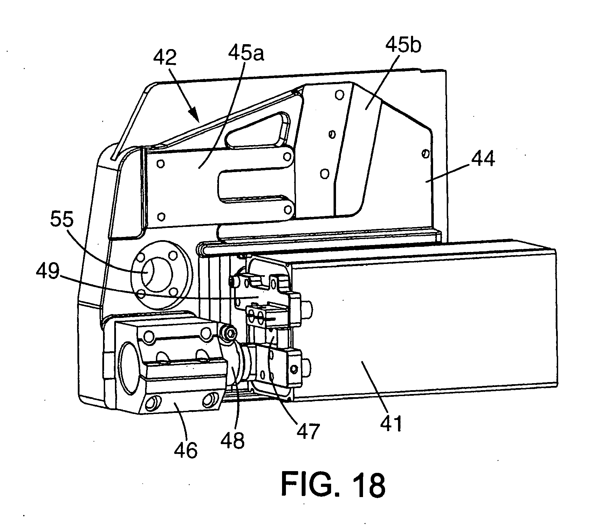

- la figure 18 est une vue de la plaque d'interface commune aux deux types de pinces en C et en X.

Selon l'invention, comme représenté sur les figures 8 à 18 et décrit ci-dessous, les pinces en C comme en X, ayant la même structure de base et fonctionnant selon le même principe que les pinces analogues de l'état de la technique, sont également équipées d'un module d'équilibrage, d'accostage et de détalonnage, lui-même réalisé selon les structures connues et pour mettre en oeuvre les mêmes principes que les modules analogues de l'état de la technique. Pour cette raison, sur les figures 8 à 18, les mêmes références numériques sont utilisées pour désigner les mêmes composants identiques ou analogues des pinces de l'invention comme des pinces de l'état de la technique, et des modules d'équilibrage, d'accostage et de détalonnage de l'invention comme ceux de l'état de la technique, puisque les pinces équipées de tels modules selon l'invention ne se distinguent des pinces équipées de tels modules selon l'état de la technique que par la position des modules, qui sont déportés à l'extérieur de la pince proprement dite, à savoir l'ensemble constitué par le sous-ensemble mobile de chaque pince et le bâti correspondant, ledit sous-ensemble mobile rassemblant les deux bras et les deux électrodes, fixes et mobiles, ainsi que l'actionneur de soudage.

Selon l'invention, le module d'équilibrage, avantageusement combiné à des moyens d'accostage et à des moyens de détalonnage, est, dans un premier exemple, monté en interface entre deux parties du support (tel que pied fixe ou bras manipulateur), dont une première partie est solidaire du bâti, lui-même solidaire du corps de l'actionneur de soudage de la pince, tandis que la seconde partie constitue le reste du support ou est solidaire du reste du support. Selon un autre exemple, et comme décrit ci-dessous en référence aux figures 8 à 18, le module d'équilibrage, d'accostage et détalonnage est monté en interface entre le support, d'une part, et, d'autre part, le bâti est solidaire du corps de l'actionneur de soudage, et donc du sous-ensemble mobile de la pince. Dans les exemples préférés de réalisation des figures 8 à 18, le module d'équilibrage, d'accostage et de détalonnage est transféré, sous la forme d'un module indépendant, sur l'un des côtés de la pince proprement dite, en interface entre le bâti et le support.

Dans ces exemples, le module indépendant d'équilibrage décrit et représenté offre un degré de liberté en translation, dont les avantages peuvent également être obtenus avec un module d'équilibrage indépendant et déporté, transposé de ceux décrits et représentés pour procurer un mouvement d'équilibrage par basculement partiel de l'ensemble de la pince proprement dite (sous-ensemble mobile et bâti) autour d'un axe.

Dans les pinces selon l'invention, l'opération d'équilibrage peut donc être indifféremment obtenue par un mouvement linéaire ou par un mouvement de rotation.

A titre de premier exemple, la pince avec module d'équilibrage, d'accostage et de détalonnage pneumatique des figures 8 à 10 a la structure de pince proprement dite et la même structure de module d'équilibrage, d'accostage et de détalonnage pneumatique que la pince décrite ci-dessus en référence aux figures 4 et 5, avec pour seules différences que le bâti 10 est réalisé sous la forme d'une plaque verticale directement solidaire d'un côté du corps 5 de l'actionneur de soudage 4 qui supporte le bras fixe 3 avec l'électrode fixe 2 et qui déplace linéairement le bras mobile 8 avec l'électrode mobile 9, le corps 22 de la cassette de guidage 11a étant directement solidaire de la face de la plaque de bâti 10 du côté opposé à la face de liaison de cette plaque de bâti 10 au sous-ensemble mobile (2, 3, 4, 8, 9), et le corps du cylindre 27 de l'actionneur 11b pneumatique d'équilibrage, d'accostage et détalonnage étant directement solidaire d'une plaque verticale 38, elle-même solidaire de la partie verticale d'une cornière 39 rigide, constituant un élément du support 40 de la pince; ce support 40 pouvant être, comme déjà dit, soit un pied fixe soit encore un bras manipulateur.

Une autre différence est que les deux manchons-coulisseaux 24, dans lesquels sont guidées en translation longitudinale, parallèlement à la direction de déplacement du bras mobile 8, les deux colonnes de guidage 23 de la cassette de guidage 11a, sont rigidement liés à la plaque 38 du support. Ainsi, la tige 29 liée au piston de l'actionneur 11b pneumatique à double effet, alimenté, comme sur les figures 4 et 5, par un distributeur 26 et une vanne de régulation 30 (non représentés), déplace le corps 22 et les colonnes de guidage 23 de la cassette de guidage 11a par coulissement dans les manchons 24 solidaires du support 38-40, parallèlement à la direction de déplacement du bras 8 et de l'électrode 9 mobiles.

Ainsi, la cassette 11a, et plus généralement le module 11 d'équilibrage, d'accostage et détalonnage pneumatique, est monté sur l'un des côtés de l'ensemble constitué par le sous-ensemble mobile (2, 3, 4, 8, 9) et le bâti 10 de la pince, avec son guidage parallèle au vecteur *̅n̅*̅ normal au plan d'assemblage des tôles 1. Il est clair que les fonctionnements de la pince proprement dite et de son module 11 sont identiques aux fonctionnements décrits ci-dessus en référence aux figures 4 et 5.

En variante, quatre ressorts tels que les ressorts 25 des figures 1 à 3 peuvent être montés autour des extrémités des deux colonnes de guidage 23 dans la cassette 11a des figures 8 à 10, de sorte à obtenir une cassette 11a de guidage et d'équilibrage élastique, l'actionneur 11b pouvant alors être simplement un vérin hydraulique ou pneumatique à simple effet, assurant les fonctions d'accostage, de détalonnage et de maintien de la pince en position détalonnée, comme décrit précédemment en référence aux figures 1 à 3.

Ainsi, la pince de soudage proprement dite n'intègre pas les fonctions d'équilibrage, d'accostage et de détalonnage, et le module indépendant d'équilibrage, d'accostage et de détalonnage est monté en interface entre la pince proprement dite, d'une part, et le support, du type pied fixe ou bras manipulateur, d'autre part.

En outre, et comme connu de l'état de la technique, un transformateur de soudage 41 est avantageusement intégré à la pince proprement dite, en étant rendu solidaire du corps 5 de l'actionneur de soudage 4 et/ou de la plaque de bâti 10.

Le second exemple des figures 11 à 13 est celui d'une pince en X, dont la structure de la pince proprement dite est telle que celle de la pince en X des figures 6 et 7, et qui est équipée d'un module 11 indépendant d'équilibrage, d'accostage et de détalonnage identique à celui de la pince en C des figures 8 à 10, mais orienté à 90° par rapport à l'orientation du module 11 de l'exemple des figures 8 à 10, en faisant référence à la direction générale du mouvement de l'actionneur 4 de soudage.

En effet, on retrouve sur la pince en X des figures 11 à 13, l'électrode 9 à l'extrémité du bras mobile 8 solidaire du levier 14 pivotant autour de l'axe de basculement 13 sur le bâti 10, rigidement lié au bras fixe 3 avec l'électrode fixe 2, et sur lequel est monté pivotant, autour de l'axe 15, le corps 5 de l'actionneur 4 de soudage, dont la tige 7 a son extrémité également pivotante autour de l'axe 16 sur le levier 14, pour que l'actionneur 4 commande les basculements du bras mobile 8 et du levier 14 autour de l'axe 13, afin d'ouvrir ou de fermer la pince sur l'assemblage de tôles 1 à souder.

Par contre, contrairement à l'état de la technique selon les figures 6 et 7, la partie du bâti 10, dont sont rigidement solidaires le bras fixe 3 et le corps 5 de l'actionneur 4, ne peut pas être pivotée autour de l'axe de basculement 13, par rapport au reste du bâti 10, à l'aide de l'actionneur pneumatique à double effet remplissant les fonctions d'équilibrage, d'accostage et de détalonnage, ou par une cassette de guidage et d'équilibrage élastique associée à un actionneur à simple effet de détalonnage, mais le bâti 10 se présente sous la forme d'une plaque de bâti verticale et latérale, sur une face de laquelle sont montés les composants du sous-ensemble mobile, à savoir le bras fixe 3 et l'électrode fixe 2, le bras mobile 8 avec l'électrode mobile 9 et le levier 14, et l'actionneur 4 de soudage ainsi que les axes 13 et 15.

De même que sur les figures 8 à 10, un transformateur de soudage 41 peut également être fixé sur cette face de la plaque de soudage 10, dont l'autre face est rigidement liée au corps 22 de la cassette de guidage 11a, qui est positionnée de sorte que, dans cet exemple, ses deux colonnes de guidage 23 parallèles et espacées sont verticales et coulissent longitudinalement dans les deux fourreaux 24 solidaires d'une face de la plaque de support 38 verticale, elle-même solidaire par son autre face d'une cornière de support 39 rigidement liée par son aile supérieure au support 40 (pied fixe ou bras manipulateur), pour assurer la liaison entre ce support 40 et la pince, le corps 27 de l'actionneur pneumatique à double effet 11b, assurant les fonctions d'équilibrage, d'accostage et de détalonnage pneumatique, étant fixé rigidement également à la plaque de support 38, et de sorte que sa tige 29 soit solidaire du corps 22 de la cassette de guidage 11a, afin d'obtenir, dans cet exemple également, un guidage parallèle au vecteur *̅n̅*̅ normal au plan d'assemblage des tôles 1.

Dans ce cas également, le module 11 d'équilibrage, d'accostage et de détalonnage pneumatique est monté par la cassette 22 sur l'un des côtés du bâti 10 de la pince, en interface entre ce bâti 10 et la plaque de support 38, la cornière 39 et le support proprement dit 40, la cornière 39 et/ou la plaque de support 38, pouvant, éventuellement, être omise selon les configurations du support 40.

En variante, comme d'ailleurs dans l'exemple des figures 8 à 10, le module 11 peut être monté en interface entre la plaque 38 et l'aile verticale de la cornière 39, le corps 22 de la cassette de guidage 11a étant fixé par exemple à la plaque 38 et les deux manchons 24 ainsi que le corps 27 de l'actionneur 11b à la cornière 39, ou encore le module 11 peut être monté en interface entre l'aile horizontale de la cornière 39 et le support 40, le corps 22 de la cassette de guidage 11a étant alors fixé par exemple à la cornière 39 et les deux manchons 24 ainsi que le corps 27 de l'actionneur 11b au support 40.

En variante également, dans l'exemple des figures 11 à 13, les colonnes 23 peuvent être entourées, de part et d'autre des manchons 24, de ressorts 25 d'équilibrage, comme dans l'état de la technique selon les figures 1 à 3, de sorte que le sous-ensemble mobile de la pince ainsi que le bâti et, éventuellement, une ou des parties du support rigidement solidaire(s) du bâti, se trouvent en équilibre entre les ressorts. Dans ce cas, et également comme dans l'état de la technique selon les figures 1 à 3, l'actionneur 11b associé peut être un actionneur à simple effet, hydraulique ou pneumatique, assurant seulementla fonction de détalonnage.

Donc, dans l'exemple de la pince en C des figures 8 à 10, comme dans l'exemple de la pince en X des figures 11 à 13, le même module d'équilibrage 11 peut autoriser des déplacements en translation du sous-ensemble mobile (2, 3, 4, 8, 9) et de son bâti 10 par rapport au support 40, l'actionneur 11b associé à la cassette de guidage 11a de ce module 11 assurant le détalonnage en permettant de ramener le sous-ensemble mobile (2, 3, 4, 8, 9) en position de référence, en butée par rapport au support 40. Dans les deux exemples, les déplacements en translation autorisés par le module 11 sont sensiblement perpendiculaires au plan d'assemblage des tôles 1 à souder, en étant également sensiblement parallèles au déplacement du bras mobile 8 dans l'exemple de la pince en C des figures 8 à 10, et sensiblement parallèles à la direction des deux électrodes 2 et 9 bout à bout en position de fermeture de la pince en X des figures 11 à 13.

Les figures 14 et 15 représentent un autre exemple de pince en C selon l'invention, vue respectivement du côté de la pince proprement dite et en position de fermeture, et du côté du module indépendant d'équilibrage et pince ouverte, la pince proprement dite étant montée sur une face d'un côté et le module indépendant d'équilibrage sur la face du côté opposé d'une plaque d'interface rigide, représentée sur la figure 18, et commune à l'exemple de la pince en C des figures 14 à 15 et à l'exemple de la pince en X des figures 16 et 17, comme décrit ci-dessous.

Comme représenté sur la figure 14, la plaque d'interface 42 présente, sur sa face 44 du côté de la pince proprement dite, deux platines 45a et 45b de montage de l'actionneur de soudage 4, dont l'une, 45a, est utilisée pour la fixation rigide du corps 5 de l'actionneur de soudage 4 contre la face 44 de la plaque d'interface 42, sur la pince en C des figures 14 et 15.

Sur cette même face 44, sont rigidement fixés le transformateur de soudage 41, éventuellement par l'intermédiaire d'une plaque de bâti, complétant la plaque d'interface 42 pour constituer le bâti rigide 10, ainsi qu'un manchon fendu 46 fixé en saillie sur cette face 44 de la plaque d'interface 42, et dans lequel est emmanché et serré, par vissage rapprochant l'une de l'autre deux parties du manchon 46 fendu, l'extrémité du bras fixe 3 qui est à l'opposé de l'électrode fixe 2, pour la fixation rigide du bras fixe 3 à la plaque d'interface 42. Sur deux sorties secondaires 47 du transformateur 41 sont fixés deux conducteurs électriques 48 et 49, dont l'un 48, fixé sous l'autre 49, est destiné à l'alimentation électrique du bras fixe 3, et s'étend donc d'une des sorties secondaires 47 du transformateur 41 jusqu'au manchon de serrage 46, de sorte que l'extrémité du bras fixe 3 emmanchée et serrée dans ce manchon 46 est en contact électrique avec le conducteur rigide 48. L'autre conducteur rigide 49 permet l'alimentation électrique du bras mobile 8 et de l'électrode mobile 9 à l'extrémité libre de ce dernier, de préférence par l'intermédiaire d'un dispositif 50 de connexion souple électrique et fluidique, qui permet une alimentation électrique par au moins un conducteur flexible central dans une gaine souple assurant simultanément l'alimentation en eau de refroidissement de l'électrode mobile 9 au travers du bras mobile 8, sur lequel ce dispositif de connexion souple 50 est raccordé, comme représenté sur la figure 14.

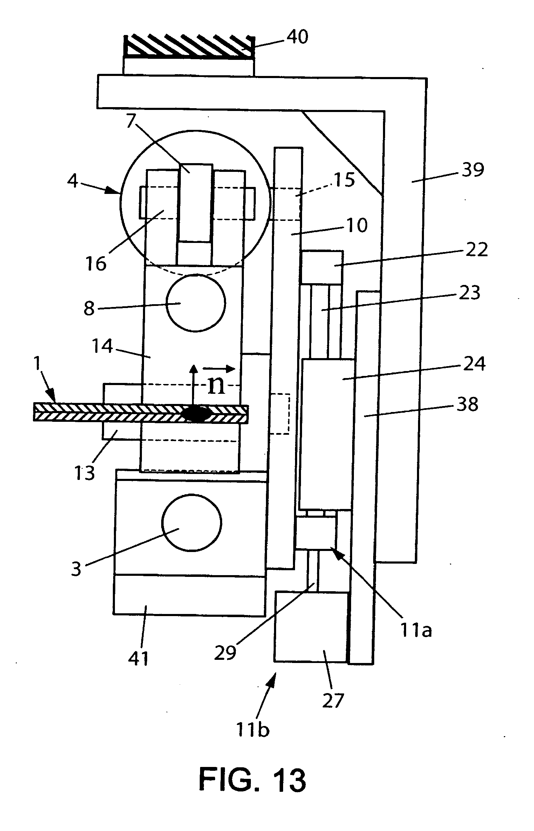

La figure 15 montre que le module indépendant 11' d'équilibrage, d'accostage et de détalonnage est monté sur l'autre face 43 de la plaque d'interface 42, cette autre face 43 étant tournée vers un organe solidaire du support, par exemple vers une plaque de support telle que 38 ou vers l'aile verticale de la cornière de support 39 des figures 10 et 13, et sur lequel organe le module 11' peut prendre appui pour déplacer la plaque d'interface 42 et donc, avec elle, le sous-ensemble mobile (2, 3, 4, 8, 9) et/ou le bâti 10 éventuel, constituant la pince proprement dite.

Comme dans les exemples précédents, le module 11' est constitué d'une cassette de guidage 11'a et d'un actionneur 11'b. Mais, dans cet exemple, l'actionneur 11'b est monté dans la cassette 11'a.

Cette cassette de guidage 11'a comporte un cadre rigide rectangulaire 51, traversé parallèlement à deux côtés opposés, de préférence les grands côtés, par deux colonnes de guidage 23 fixées de façon rigide à ladite plaque interface 42 au moyen de vis au travers des orifices 56 réalisés dans les colonnes 23. Les colonnes 23 sont espacées, parallèles et guidées en translation à leurs extrémités sur des paliers solidaires du cadre 51. Solidaire des colonnes 23 est fixée au moins une barrette 52 liée elle-même à la tige 29 d'un actionneur linéaire 11'b de type vérin, parallèle aux colonnes 23 et s'étendant entre elles, et dont le cylindre 27 est fixé au cadre 51 de la cassette 11. Le cadre 51 est lui-même vissé au moyen des taraudages 53 au bras manipulateur ou à un pied rigide 40 par l'intermédiaire d'une plaque de support telle que 38 ou l'aile verticale de la cornière de support 39 des figures 10 et 13. De sorte que l'actionneur 11'b est apte à commander l'accostage, l'équilibrage et le détalonnage de la pince. Ledit actionneur 11'b étant pneumatique à deux chambres de gaz sous pression de part et d'autre d'un piston relié rigidement par la tige 29 à l'une au moins des barrettes 52, afin de réaliser les deux moyens élastiques antagonistes d'équilibrage tel que décrit sur les figures 8, 9 et 10.

Dans cet exemple, la cassette 11'a est uniquement une cassette de guidage, l'actionneur 11'b étant un vérin pneumatique à double effet assurant les fonctions d'accostage, équilibrage et détalonnage pneumatique, mais, en variante, les parties des colonnes 23 de part et d'autre de la barrette 52 peuvent être entourées de quatre ressorts hélicoïdaux pour assurer un équilibrage à ressorts, auquel cas la cassette 11'a est une cassette de guidage et d'équilibrage élastique, l'actionneur 11'b pouvant être un actionneur hydraulique ou pneumatique à simple effet assurant la fonction de détalonnage seulement.

Ainsi, comme le sous-ensemble rigide (23, 52, 29) est fixé à la face 43 de la plaque d'interface 42, et que le cadre 51 est rigidement fixé au support, l'actionneur 11'b est apte à commander des déplacements linéaires du sous-ensemble rigide (23, 52, 29) avec la plaque d'interface 42 et la pince proprement dite sur l'autre face de cette plaque 42, parallèlement à la direction de déplacement donnée par l'actionneur de soudage 4 au bras 8 et à l'électrode 9 mobiles, c'est-à-dire sensiblement perpendiculairement au plan de l'assemblage des tôles à souder.

Lorsque la cassette 11'a assure l'équilibrage élastique, chaque colonne 23 est entourée de deux ressorts hélicoïdaux antagonistes tels que les ressorts 25 de l'exemple de l'état de la technique des figures 1 à 3, chaque ressort prenant appui par une extrémité sur le cadre 51 et par l'autre extrémité sur la barrette 52, du côté opposé à l'autre ressort. La pince proprement dite avec le transformateur 41 et la plaque d'interface 42 sont alors en équilibre entre les ressorts.

Lorsque la cassette 11'a assure seulement le guidage longitudinal, l'actionneur 11'b est alors pneumatique avec deux chambres de gaz sous pression, telles que les chambres 27a et 27b de part et d'autre d'un piston, tel que le piston 28 de l'actionneur des figures 4 et 5, et relié rigidement par la tige 29 à la barrette 52, afin de réaliser deux moyens élastiques antagonistes d'équilibrage.

En variante, le sous-ensemble rigide (23, 52, 29) de la cassette 11'a peut être rigidement fixé au support et le cadre 51 rigidement fixé à la face 43 de la plaque d'interface 42, la platine 54 de fixation sur la face 43 de la plaque d'interface 42 étant alors aménagée pour pouvoir fixer le cadre 51 indifféremment dans l'une ou l'autre d'au moins deux positions dans lesquelles le cadre 51 est orienté de sorte à pouvoir coulisser le long des colonnes 23 selon deux directions perpendiculaires l'une à l'autre, pour permettre l'utilisation de la même plaque d'interface 42 et du même module 11' également sur une pince en X, comme représenté sur les figures 16 et 17.

A l'effet d'être également compatible avec une pince en X, la plaque d'interface 42 présente également une ouverture transversale circulaire 55, formant palier aménagé pour recevoir l'axe 13 de basculement du levier 14 supportant rigidement le bras mobile 8 avec l'électrode mobile 9 de la pince en X, comme représenté sur la figure 16. Sur cette figure 16, une plaque de renforcement 56 est fixée de façon rigide entre l'extrémité de l'axe d'articulation 13 et le corps 5 de l'actionneur 4 de soudage, monté pivotant par son corps 5 sur la platine 45b sur la face 44 de la plaque d'interface 42. Comme dans les exemples précédents de pinces en X, la tige 7 de l'actionneur 4 de soudage est également montée pivotante par son extrémité extérieure au corps 5 dans une chape supérieure du levier 14 ainsi basculé avec le bras mobile 8 par l'actionneur 4 autour de l'axe 13.

Pour assurer les fonctions d'équilibrage, d'accostage et de détalonnage de cette pince en X, sur l'autre face 43 de la plaque d'interface 42 est monté le même module indépendant 11' que sur la pince en C des figures 14 et 15, mais, pour tenir compte du fait que, sur cette pince en X, les deux électrodes 2 et 9 sont au bout d'extrémités recourbées l'une vers l'autre des bras 3 et 8, et donc que le vecteur *̅n̅*̅ normal au plan d'assemblage des tôles à souder est orienté sensiblement verticalement, et non plus sensiblement horizontalement comme sur la pince en C des figures 14 et 15, ce module indépendant 11' est fixé sur la platine de montage 54 sur cette face 43 de la plaque d'interface 42 de sorte que les colonnes 23 de la cassette de guidage 11'a et l'actionneur 11'b sont orientés sensiblement verticalement, ce qui est aisément permis par le vissage des quatre boulons au travers des orifices 57 dans les colonnes 23 pour la fixation du sous-ensemble rigide (23, 52, 29) de la cassette de guidage 11'a, la platine de montage 54 étant aménagé en conséquence, d'alésages taraudes.

Ainsi, le module 11', qui fonctionne dans les mêmes conditions et de la même manière que sur la pince en C des figures 14 et 15, procure encore un degré de liberté en translation perpendiculairement au plan de l'assemblage des tôles à souder.

Le module 11' d'équilibrage, d'accostage et de détalonnage est donc apte à se monter sur la face 43 de la plaque d'interface 42 dans l'une ou l'autre de quatre positions autorisant des déplacements en translation sensiblement parallèles à l'une ou l'autre de deux directions sensiblement perpendiculaires entre elles, dans le plan de la face 43, deux positions opposées l'une à l'autre correspondant à la direction sensiblement horizontale, pour une pince en C comme sur les figures 14 et 15, et les deux autres positions opposées correspondant à la direction sensiblement verticale pour la pince en X des figures 16 et 17. Si les directions d'action du module d'équilibrage doivent être inclinées l'une sur l'autre, en passant d'une pince en C à une pince en X, et inversement, sans que ces directions soient perpendiculaires l'une à l'autre, les moyens de fixation du cadre rigide 51 sur la platine 54 de la plaque d'interface 42 doivent être aménagés en conséquence.

Dans les différences réalisations de pinces en X et en C selon l'invention, on constate que le fait de déporter les fonctions d'équilibrage, d'accostage et de détalonnage à l'extérieur de l'ensemble constitué par le sous-ensemble mobile de la pince proprement dite et son bâti permet d'avoir un plus grand nombre de composants et sous-ensembles communs aux deux types de pinces, tout en réduisant le nombre d'éléments mobiles sur la pince proprement dite.

Il en résulte également que l'invention permet de procurer les fonctions d'équilibrage, accostage et détalonnage sous la forme d'un module indépendant et optionnel, sans surcoût sur la pince de base, de type en C ou en X, ce qui est un avantage particulièrement intéressant dans le cas d'applications n'imposant pas la fonction d'équilibrage, comme cela est le cas lorsque le positionnement est assuré par un robot. Il en résulte aussi une importante simplification de la pince de base, ainsi d'ailleurs que du module d'équilibrage, qui peut être commun et standardisé pour toutes les pinces, indépendamment de leur cinématique en X ou en C, du fait de la fixation du module sur l'une des faces latérales de la pince, de préférence par l'intermédiaire d'une plaque d'interface, sur laquelle il suffit d'orienter la cassette de guidage, et, éventuellement d'équilibrage, de façon à obtenir un déplacement du bras et de l'électrode fixes qui soit sensiblement perpendiculaire au plan d'assemblage des tôles.

## Revendications

1. Pince destinée à enserrer des tôles et utilisée en association avec un bras manipulateur, dit robot, et comprenant :
- un bâti (10) rigide, lié à un support (40), tel qu'un pied rigide ou ledit robot,
- un sous-ensemble mobile, lié audit bâti (10), et comportant :
- un premier bras (3), dit fixe,
- un second bras (8), dit mobile, et
- un actionneur (4), prenant appui sur ledit bras fixe (3) pour déplacer le bras (8) mobile par rapport au bras (3) fixe, suivant: un premier degré de liberté, en translation ou rotation, afin de fermer ou d'ouvrir la pince pour, respectivement, enserrer un assemblage de tôles (1) entre les bras fixe et mobile (3, 8) ou libérer l'assemblage de tôles (1), et
- un module d'équilibrage (11), introduisant un degré de liberté supplémentaire, en translation ou rotation, entre ledit support (40), d'une part, et, d'autre part, un ensemble intégrant ledit sous-ensemble mobile (3, 4, 8), afin d'équilibrer les efforts exercés sur les extrémités (2, 9) respectivement des bras fixe et mobile (3, 8) en position de fermeture, **caractérisée en ce que** ledit module d'équilibrage (11) est déporté à l'extérieur de l'ensemble constitué par ledit sous-ensemble mobile (2, 3, 4, 8, 9) et ledit bâti (10), formant ainsi un module indépendant, sur l'un des côtés de la pince proprement dite, en interface entre ledit support (40) et ledit bâti (10) et/ou sous-ensemble mobile (2, 3, 4, 8, 9).

2. Pince selon la revendication 1, **caractérisée en ce que** ledit module d'équilibrage (11) est combiné à des moyens d'accostage (11b), permettant d'amener l'extrémité fixe (2) au contact de l'assemblage de tôles (1), par déplacement dudit sous-ensemble mobile (2, 3, 4, 8, 9) après libération dudit degré de liberté supplémentaire, suite à un positionnement initial de la pince ouverte avec un jeu initial entre l'assemblage de tôles (1) et l'extrémité fixe.

3. Pince selon l'une quelconque des revendications 1 et 2, **caractérisée en ce que** ledit module d'équilibrage (11) est combiné à des moyens de détalonnage (11b) permettant de ramener et maintenir le sous- ensemble mobile (2, 3, 4, 8, 9) en position de référence, en butée par rapport audit; support (40).

4. Pince selon l'une quelconque des revendications 1 à 3, **caractérisée en ce que** ledit module d'équilibrage (11) est monté en interface entre deux parties (38, 39) dudit support (40), dont une première partie (38) est solidaire dudit bâti (10) et/ou du sous-ensemble mobile (2, 3, 4, 8, 9), et la seconde partie (39) constitue le reste du support (40) ou est solidaire du reste du support (40).

5. Pince selon l'une quelconque des revendications 1 à 4, **caractérisée en ce que** ledit module d'équilibrage (11) se fixe sur un flanc du bâti (10) supportant le sous-ensemble mobile (2, 3, 4, 8, 9) et/ou du corps (5) de l'actionneur du sous-ensemble mobile.

6. Pince selon l'une quelconque des revendications 1 à 5, **caractérisée en ce que** ledit module d'équilibrage (11) autorise des déplacements en translation ou en rotation du sous-ensemble mobile (2, 3, 4, 8, 9) et de son bâti (10) par rapport au support (40).

7. Pince selon l'une quelconque des revendications 1 à 6, **caractérisée en ce que** le module d'équilibrage (11) comprend :
- au moins une cassette de guidage (11a) du mouvement relatif, selon le degré de liberté supplémentaire, entre le sous-ensemble mobile (2, 3, 4, 8, 9) avec son bâti (10) et le support (40),
- au moins deux moyens élastiques (25; 27a, 27b) d'équilibrage sollicitant de manière antagoniste au moins un organe (24, 28) qui est guidé dans ladite cassette de guidage (11a) ou solidaire en déplacement de ladite cassette (Iia), et au moins un actionneur (11b) d'accostage, de détalonnage et de blocage et maintien du sous-ensemble mobile (2, 3, 4, 8, 9) en position détalonnée.

8. Pince selon l'une quelconque des revendications 1 à 7, **caractérisée en ce que** le module d'équilibrage (11) est mis en place sur une pince de type en C, à mouvement linéaire du bras mobile (8) par rapport au bras fixe (3), de sorte que les déplacements en translation autorisés par ledit module (11) sont sensiblement parallèles aux déplacements du bras mobile (8), et donc sensiblement perpendiculaires au plan d'assemblage des tôles (1).

9. Pince selon l'une quelconque des revendications 1 à 7, **caractérisée en ce que** le module d'équilibrage (11) est mis en place sur une pince de type en X, à mouvement de rotation du bras mobile (8) par rapport au bras fixe (3), de sorte que les déplacements en translation autorisés par ledit module (11) sont sensiblement perpendiculaires au plan d'assemblage des tôles (1), et donc sensiblement parallèles à la direction des deux extrémités (2, 9) bout à bout en position de fermeture de la pince.

10. Pince selon l'une quelconque des revendications 1 à 9, **caractérisée en ce que** le module d'équilibrage (11') est monté sur une première face (43) d'une plaque d'interface (42) qui est tournée vers un organe (38, 39) solidaire du support (40) et sur lequel le module (11') prend appui pour déplacer ladite plaque d'interface (42), qui est solidaire par sa seconde face (44) du bâti (10) et/ou du sous-ensemble mobile (2, 3, 4, 8, 9) .

11. Pince selon la revendication 10, **caractérisée en ce que** le module d'équilibrage (11') est apte à se monter sur ladite première face (43) de ladite plaque d'interface (42), dans l'une ou l'autre d'au moins deux positions autorisant des déplacements en translation sensiblement parallèle à respectivement l'une ou l'autre d'au moins deux directions inclinées entre elles, et de préférence sensiblement perpendiculaires entre elles, dans le plan de ladite première face (43), selon que la pince est du type en C, ou en X, respectivement à déplacements en translation ou en rotation du bras mobile (8) par rapport au bras fixe (3) .

12. Pince selon l'une quelconque des revendications 10 et 11, **caractérisée en ce que** ladite seconde face (44) de la plaque d'interface (42) est équipée de moyens de fixation rigide (46 ; 45a) du bras fixe (3) et de l'actionneur (4) du sous-ensemble mobile (2, 3, 4, 8, 9).

13. Pince selon l'une quelconque des revendications 1 à 12, **caractérisée en ce que** l'outil est une pince à souder par résistance et que les extrémités (2, 9) respectivement des bras fixe et mobile (3, 8) sont des électrodes de soudage.

14. Pince selon la revendication 13, **caractérisée en ce qu'**un transformateur (41) de soudage est intégré à l'ensemble du sous- ensemble mobile (2, 3, 4, 8, 9) et du bâti (10), et est solidaire du bâti (10) et/ou du bras fixe (3).

15. Pince selon la revendication 14 telle que rattachée à l'une quelconque des revendications 10 à 12, **caractérisée en ce que** le transformateur (41) de soudage est fixé rigidement à ladite seconde face (44) de la plaque d'interface (42).

16. Pince selon l'une quelconque des revendications 10 à 12 et 15, **caractérisée en ce que** ladite plaque d'interface (42) est percée d'une ouverture de passage (55) aménagée pour la réception d'un axe (13) d'articulation du bras mobile (8) en rotation, de préférence ledit axe (13) d'articulation se montant également dans une plaque de renforcement (56) fixée rigidement entre ledit axe (13) d'articulation et l'actionneur (4) de soudage, sur une pince de type en X.

17. Pince selon l'une des revendications 15 et 16, telle que rattachée à la revendication 12, **caractérisée en ce que** deux conducteurs électriques (48, 49) sont fixés sur la sortie (47) du transformateur (41) de soudage et destinés chacun à l'alimentation électrique de l'un respectivement des deux bras mobile (8) et fixe (3) du sous-ensemble mobile (2, 3, 4, 8, 9), le conducteur (48) destiné au bras fixe (3) s'étendant de la sortie (47) du transformateur (41) à un manchon (46) de serrage, fixé en saillie sur la seconde face (44) de la plaque d'interface (42), pour la fixation rigide du bras fixe (3) à ladite plaque d'interface (42).

18. Pince selon l'une quelconque des revendications 10, 12 et 15 à 17, telle que rattachée à la revendication 7, **caractérisée en ce que** la cassette de guidage (11'a) comporte un cadre rigide rectangulaire (51), traversé parallèlement à deux côtés opposés, de préférence les grands côtés, par deux colonnes de guidage (23) fixées de façon rigide à ladite plaque d'interface (42), espacées et parallèles, et guidées en translation à leurs extrémités sur des paliers solidaires du cadre (51), au moins une barrette (52) étant fixée solidaire des colonnes (23) et liée elle-même à la tige (29) d'un actionneur linéaire (11'b) de type vérin, parallèle aux colonnes (23) et s'étendant entre elles, et dont le cylindre (27) est fixé au cadre (51) de la cassette (11'), le cadre (51) étant fixé de façon directe ou au moyen d'un support intermédiaire rigide au bras manipulateur ou à un pied rigide , ou inversement, le cadre (51) étant fixé rigidement à la première face (43) de la plaque d'Interface (42) et le sous-ensemble rigide constitué par les colonnes (23) et la ou les barrettes (52) est fixé de façon directe ou au moyen d'un support intermédiaire rigide au bras manipulateur ou à un pied rigide, de sorte que l'actionneur (11'b) est apte à commander l'accostage et le détalonnage, au moins une colonne (23) de guidage étant entourée de deux ressorts hélicoïdaux antagonistes prenant chacun appui par une extrémité sur le cadre (51) et par l'autre extrémité sur l'une au moins des barrettes (52), du côté opposé à l'autre ressort, ou ledit actionneur (11'b) étant pneumatique à deux chambres de gaz sous pression de part et d'autre d'un piston relié rigidement par la tige (29) à l'une au moins des barrettes (52), afin de réaliser les deux moyens élastiques antagonistes d'équilibrage.

## Claims

1. A gripper for clamping plates, to be used in combination with a manipulator arm called a robot, and comprising:
- a rigid frame (10), connected to a support (40) such as a rigid stand or said robot,
- a movable subassembly connected to said frame (10), and having:
- a first arm (3), called the fixed arm,
- a second arm (8), called the movable arm, and
- an actuator (4) supported on said fixed arm (3) in order to move the movable arm (8) with respect to the fixed arm (3), along a first degree of freedom, in translation or rotation, so as to close or open the gripper, in order respectively to clamp an assembly of plates (1) between the fixed and moving arms (3, 8) or in order to release the assembly of plates (1), and
- a balancing module (11), introducing an additional degree of freedom in translation or rotation between said support (40) on the one hand, and an assembly incorporating said movable subassembly (3, 4, 8) on the other hand, in order to balance the forces which are exerted on the ends (2, 9) of the fixed and moving arms (3, 8) respectively in the closed position, **characterized in that** said balancing module (11) is offset to the outside of the assembly formed by said movable subassembly (2, 3, 4, 8, 9) and said frame (10), thus forming an independent module, on one of the sides of the actual gripper, as an interface between said support (40) and said frame (10) and/or said movable subassembly (2, 3, 4, 8, 9).

2. The gripper as claimed in claim 1, **characterized in that** said balancing module (11) is combined with docking means (11b), enabling the fixed end (2) to be brought into contact with the assembly of plates (1), by the movement of said movable subassembly (2, 3, 4, 8, 9) after the release of said additional degree of freedom, following an initial positioning of the open gripper with an initial clearance between the assembly of plates (1) and the fixed end (2).

3. The gripper as claimed in either of claims 1 and 2, **characterized in that** said balancing module (11) is combined with backing-off means (11b) enabling the movable subassembly (2, 3, 4, 8, 9) to be returned to the reference position, in which it is in abutment with respect to said support (40), and kept there.

4. The gripper as claimed in any one of claims 1 to 3, **characterized in that** said balancing module (11) is mounted to form an interface between two parts (38, 39) of said support (40), of which a first part (38) is fixed to said frame (10) and/or to the movable subassembly (2, 3, 4, 8, 9), and the second part (39) forms the rest of the support (40) or is fixed to the rest of the support (40).

5. The gripper as claimed in any one of claims 1 to 4, **characterized in that** said balancing module (11) is fixed on one side of the frame (10) supporting the movable subassembly (2, 3, 4, 8, 9) and/or on one side of the body (5) of the actuator of the movable subassembly.

6. The gripper as claimed in any one of claims 1 to 5, **characterized in that** said balancing module (11) allows translational or rotational movements of the movable subassembly (2, 3, 4, 8, 9) and of its frame (10) with respect to the support (40).

7. The gripper as claimed in any one of claims 1 to 6, **characterized in that** the balancing module (11) comprises:
- at least one box (11a) for guiding the relative movement, along the additional degree of freedom, between the movable subassembly (2, 3, 4, 8, 9) with its frame (10) and the support (40),
- at least two resilient balancing means (25; 27a, 27b) which stress in opposite directions at least one member (24, 28) which is guided in said guide box (11a) or which is fixed to said box (11a) with respect to movement, and
- at least one actuator (11b) for docking and backing-off the movable subassembly (2, 3, 4, 8, 9) and for locking it and holding it in the backed-off position.

8. The gripper as claimed in any one of claims 1 to 7, **characterized in that** the balancing module (11) is fitted on a C type gripper, having a linear movement of the movable arm (8) with respect to the fixed arm (3), in such a way that the translational movements allowed by said module (11) are substantially parallel to the movements of the movable arm (8), and are therefore substantially perpendicular to the plane of assembly of the plates (1).

9. The gripper as claimed in any one of claims 1 to 7, **characterized in that** the balancing module (11) is fitted on an X type gripper, having a rotational movement of the movable arm (8) with respect to the fixed arm (3), in such a way that the translational movements allowed by said module (11) are substantially perpendicular to the plane of assembly of the plates (1), and are therefore substantially parallel to the direction of the two ends (2, 9) placed end to end in the closed position of the gripper.

10. The gripper as claimed in any one of claims 1 to 9, **characterized in that** the balancing module (11') is mounted on a first face (43) of an interface plate (42) which is turned toward a member (38, 39) fixed to the support (40), the module (11') bearing on this member to move said interface plate (42) which is fixed by its second face (44) to the frame (10) and/or to the movable subassembly (2, 3, 4, 8, 9).

11. The gripper as claimed in claim 10, **characterized in that** the balancing module (11') can be mounted on said first face (43) of said interface plate (42), in one or another of at least two positions allowing translational movements substantially parallel to one or another, respectively, of at least two directions which are inclined to each other and preferably substantially perpendicular to each other, in the plane of said first face (43), according to whether the gripper is of the C type or the X type, which have, respectively, translational and rotational movements of the movable arm (8) with respect to the fixed arm (3).

12. The gripper as claimed in either of claims 10 and 11, **characterized in that** said second face (44) of the interface plate (42) is provided with means (46; 45a) for rigidly fixing the fixed arm (3) and the actuator (4) of the movable subassembly (2, 3, 4, 8, 9).

13. The gripper as claimed in any one of claims 1 to 12, **characterized in that** the tool is a resistance welding gripper and **in that** the ends (2, 9) of the fixed and movable arms (3, 8) respectively are welding electrodes.

14. The gripper as claimed in claim 13, **characterized in that** a welding transformer (41) is incorporated in the assembly of the movable subassembly (2, 3, 4, 8, 9) and the frame (10), and is fixed to the frame (10) and/or to the fixed arm (3).

15. The gripper as claimed in claim 14 as appended to any one of claims 10 to 12, **characterized in that** the welding transformer (41) is fixed rigidly to said second face (44) of the interface plate (42).

16. The gripper as claimed in any one of claims 10 to 12 and 15, **characterized in that** said interface plate (42) is pierced by a through hole (55) designed to receive an articulation shaft (13) of the rotationally movable arm (8), said articulation shaft (13) preferably being additionally mounted in a reinforcing plate (56) fixed rigidly between said articulation shaft (13) and the welding actuator (4), in an X type gripper.

17. The gripper as claimed in either of claims 15 and 16, as appended to claim 12, **characterized in that** two electrical conductors (48, 49) are fixed on the output (47) of the welding transformer (41), each being intended to supply power to a respective one of the two movable (8) and fixed (3) arms of the movable subassembly (2, 3, 4, 8, 9), the conductor (48) intended for the fixed arm (3) extending from the output (47) of the transformer (41) to a clamping sleeve (46) which is fixed to and projects from the second face (44) of the interface plate (42) to fix the fixed arm (3) rigidly to said interface plate (42).

18. The gripper as claimed in any one of claims 10, 12 and 15 to 17, as appended to claim 7, **characterized in that** the guide box (11'a) has a rigid rectangular frame (51) which is passed through in a way parallel to two opposite sides, preferably the large sides, by two guide columns (23) which are fixed rigidly to said interface plate (42), are spaced apart from each other and parallel, and are guided in translation at their ends on bearings fixed to the frame (51), at least one bar (52) being fixed securely to the columns (23) and being connected to the rod (29) of a linear actuator (11'b) of the jack type, parallel to the columns (23) and extending between them, the cylinder (27) of the actuator being fixed to the frame (51) of the box (11'), the frame (51) being fixed directly or by means of a rigid intermediate support to the manipulator arm or to a rigid stand, or, conversely, the frame (51) being fixed rigidly to the first face (43) of the interface plate (42), while the rigid subassembly formed by the columns (23) and the bar or bars (52) is fixed directly or by means of a rigid intermediate support to the manipulator arm or to a rigid stand, in such a way that the actuator (11'b) can provide docking and backing-off movements, at least one guide column (23) being surrounded by two opposing helical springs, each of which has one end bearing on the frame (51) and the other end bearing on at least one of the bars (52), on the side opposite the other spring, or said actuator (11'b) being pneumatic with two pressurized gas chambers, one on either side of a piston connected rigidly by the rod (29) to at least one of the bars (52), in order to form the two opposing resilient balancing means.

## Patentansprüche

1. Zange zum Einspannen von Blechen, die in Verbindung mit einem Geberarm, genannt Roboter, benutzt wird, umfassend:
- ein biegesteifes Gestell (10), das mit einer Stütze (40) wie z.B. einem biegesteifen Fuß oder mit dem Roboter verbunden ist,
- eine bewegliche Teilanordnung, die mit dem Gestell (10) verbunden ist, aufweisend:
- einen ersten Arm (3), der unbeweglich ist,
- einen zweiten Arm (8), der beweglich ist, und
- ein Betätigungsgerät (4), der auf dem unbeweglichen Arm (3) gestützt ist, um den beweglichen Arm (8) in Bezug auf den unbeweglichen Arm (3) zu bewegen, gemäß einem ersten Freiheitsgrad, in Translation oder Rota-tion, um die Zange zu schließen oder zu öffnen, um eine Anordnung von Blechen (1) zwischen dem unbeweglichen Arm und dem beweg-lichen Arm (3, 8) einzuspannen oder um die Anordnung von Blechen (1) freizugeben, und
- ein Ausgleichsmodul (11), das einen zusätzlichen Freiheitsgrad in Translation oder Rotation zwischen der Stütze (40) einerseits und andererseits einer die bewegliche Teilanordnung (3, 4, 8) integrierenden Anordnung einführt, um die Kräfte auszugleichen, die an den Enden (2, 9) der unbeweglichen und beweglichen Arme (3, 8) in der Schließstellung ausgeübt werden,
**dadurch gekennzeichnet, dass** das Ausgleichsmodul (11) an die Außenseite von der Anordnung, die durch die bewegliche Teilanordnung (2, 3, 4, 8, 9) und das Gestell (10) ausgebildet ist, verschoben ist und auf diese Weise an einer der Flächen der eigentlichen Zange zwischen der Stütze (40) und dem Gestell (10) und/oder der beweglichen Teilanordnung (2, 3, 4, 8, 9) ein selbstständiges Modul als Schnittstelle ausbildet.

2. Zange nach Anspruch 1, **dadurch gekennzeichnet, dass** das Ausgleichsmodul (11) mit einer Anlegeeinrichtung (11b) verbunden ist, so dass ermöglicht wird, dass das unbewegliche Ende (2) mit der Anordnung von Blechen (1) in Kontakt gebracht wird, indem die bewegliche Teilanordnung (2, 3, 4, 8, 9) bewegt wird, nachdem der zusätzliche Freiheitsgrad freigegeben ist, im Anschluss an eine erste Positionierung der offenen Zange mit einem ersten Spielraum zwischen der Anordnung von Blechen (1) und dem unbeweglichen Ende.

3. Zange nach einem der Ansprüche 1 und 2, **dadurch gekennzeichnet, dass** das Ausgleichsmodul (11) mit einer Hinterdreheinrichtung (11b) verbunden ist, so dass ermöglicht wird, dass die bewegliche Teilanordnung (2, 3, 4, 8, 9) in Bezug auf die Stütze (40) bis zum Anschlag in eine Bezugsposition zurückgebracht und in dieser Bezugsposition gehalten wird.

4. Zange nach einem der Ansprüche 1 bis 3, **dadurch gekennzeichnet, dass** das Ausgleichsmodul (11) als Schnittstelle zwischen zwei Abschnitten (38, 39) der Stütze (40) montiert ist, von welchen ein erster Abschnitt (38) mit dem Gestell (10) und/oder mit der beweglichen Teilanordnung (2, 3, 4, 8, 9) verbunden ist und der zweite Abschnitt (39) den Rest der Stütze (40) ausbildet oder mit dem Rest der Stütze (40) verbunden ist.

5. Zange nach einem der Ansprüche 1 bis 4, **dadurch gekennzeichnet, dass** das Ausgleichsmodul (11) an einem Flansch des Gestells (10), der die bewegliche Teilanordnung (2, 3, 4, 8, 9) stützt, und/oder des Körpers (5) des Betätigungsgeräts der beweglichen Teilanordnung befestigt ist.

6. Zange nach einem der Ansprüche 1 bis 5, **dadurch gekennzeichnet, dass** das Ausgleichsmodul (11) Bewegungen in Translation oder in Rotation der beweglichen Teilanordnung (2, 3, 4, 8, 9) und des Gestells (10) in Bezug auf die Stütze (40) ermöglicht.

7. Zange nach einem der Ansprüche 1 bis 6, **dadurch gekennzeichnet, dass** das Ausgleichsmodul (11) umfasst:
- mindestens einen Führungsschlitten (11a) für die relative Bewegung entsprechend dem zusätzlichen Freiheitsgrad zwischen der beweglichen Teilanordnung (2, 3, 4, 8, 9), die das Gestell (10) aufweist, und der Stütze (40),
- mindestens zwei elastische Ausgleichseinrichtungen (25; 27a, 27b), die ermöglichen, dass auf entgegengesetzt wirkende Weise mindestens ein Körper (24, 28) in dem Führungsschlitten (11a) geführt oder beim Bewegen des Schlittens (11a) verbunden ist, und mindestens ein Betätigungsgerät (11b) zum Anlegen und Hinterdrehen und zum Blockieren und Halten der beweglichen Teilanordnung (2, 3, 4, 8, 9) in der hintergedrehten Stellung.

8. Zange nach einem der Ansprüche 1 bis 7, **dadurch gekennzeichnet, dass** das Ausgleichsmodul (11) an einer C-förmigen Zange angebracht ist, die eine lineare Bewegung des beweglichen Arms (8) in Bezug auf den unbeweglichen Arm (3) aufweist, so dass die Bewegungen in Translation, die durch den Modul (11) ermöglicht sind, im Wesentlichen parallel mit den Bewegungen des beweglichen Arms (8) und daher im Wesentlichen rechtwinklig zu der Anordnungsebene der Bleche (1) sind.

9. Zange nach einem der Ansprüche 1 bis 7, **dadurch gekennzeichnet, dass** das Ausgleichsmodul (11) an einer X-förmigen Zange angebracht ist, die eine Rotationsbewegung des beweglichen Arms (8) in Bezug auf den unbeweglichen Arm (3) aufweist, so dass die Bewegungen in Translation, die durch den Modul (11) ermöglicht sind, im Wesentlichen rechtwinklig zu der Anordnungsebene der Bleche (1) und daher im Wesentlichen parallel mit der Richtung der zwei Enden (2, 9) Ende an Ende in der Schließstellung der Zange sind.

10. Zange nach einem der Ansprüche 1 bis 9, **dadurch gekennzeichnet, dass** das Ausgleichsmodul (11') an einer ersten Fläche (43) einer Schnittstellenplatte (42) angebracht ist, die einem Körper (38, 39) zugewandt ist, der mit der Stütze (40) verbunden ist und auf dem der Modul (11') zum Bewegen der Schnittstellenplatte (42) gestützt ist, deren zweite Fläche (44) mit dem Gestell (10) und/oder mit der beweglichen Teilanordnung (2, 3, 4, 8, 9) verbunden ist.

11. Zange nach Anspruch 10, **dadurch gekennzeichnet, dass** das Ausgleichsmodul (11') dazu geeignet ist, an der ersten Fläche (43) der Schnittstellenplatte (42) angebracht zu sein, in der einen oder der anderen von mindestens zwei Stellungen, so dass die Bewegungen in Translation im Wesentlichen parallel mit der einen oder der anderen von mindestens zwei Richtungen ermöglicht sind, die in Bezug aufeinander geneigt und vorzugsweise im Wesentlichen rechtwinklig zueinander sind, in der Ebene der ersten Fläche (43), in Abhängigkeit davon, ob die Zange C-förmig oder X-förmig ist, mit Bewegungen in Translation oder in Rotation des beweglichen Arms (8) in Bezug auf den unbeweglichen Arm (3).

12. Zange nach einem der Ansprüche 10 und 11, **dadurch gekennzeichnet, dass** die zweite Fläche (44) der Schnittstellenplatte (42) mit biegesteifen Befestigungseinrichtungen (46; 45a) für den unbeweglichen Arm (3) und für das Betätigungsgerät (4) der beweglichen Teilanordnung (2, 3, 4, 8, 9) versehen ist.

13. Zange nach einem der Ansprüche 1 bis 12, **dadurch gekennzeichnet, dass** das Werkzeug eine Zange zum Widerstandsschweißen ist und die Enden (2, 9) der beweglichen und unbeweglichen Arme (3, 8) Schweißelektroden sind.

14. Zange nach Anspruch 13, **dadurch gekennzeichnet, dass** ein Schweißtransformator (41) in der Anordnung der beweglichen Teilanordnung (2, 3, 4, 8, 9) und des Gestells (10) integriert und mit dem Gestell (10) und/oder mit dem unbeweglichen Arm (3) verbunden ist.

15. Zange nach Anspruch 14 in Verbindung mit einem der Ansprüche 10 bis 12, **dadurch gekennzeichnet, dass** der Schweißtransformator (41) auf biegesteife Weise an der zweiten Fläche (44) der Schnittstellenplatte (42) befestigt ist.

16. Zange nach einem der Ansprüche 10 bis 12 und 15, **dadurch gekennzeichnet, dass** die Schnittstellenplatte (42) von einer Durchgangsöffnung (55) durchbrochen ist, die dazu geeignet ist, einen Gelenkstift (13) des beweglichen Arms (8) in Rotation aufzunehmen, wobei der Gelenkstift (13) vorzugsweise ebenfalls in einer Verstärkungsplatte (56) angebracht ist, die auf biegesteife Weise zwischen dem Gelenkstift (13) und dem Schweißbetätigungsgerät (4) an einer X-förmigen Zange befestigt ist.

17. Zange nach einem der Ansprüche 15 und 16 in Verbindung mit Anspruch 12, **dadurch gekennzeichnet, dass** zwei elektrische Leitungen (48, 49) an dem Ausgang (47) des Schweißtransformators (41) befestigt sind und jede von ihnen für die Stromversorgung von einem der beiden beweglichen (8) und unbeweglichen (3) Arme der beweglichen Teilanordnung (2, 3, 4, 8, 9) bestimmt ist, wobei die Leitung (48), die für den unbeweglichen Arm (3) bestimmt ist, sich von dem Ausgang (47) des Transforma-tors (41) bis zu einer Klemm-Muffe (46) erstreckt, der an einem Vorsprung an der zweiten Fläche (44) der Schnittstellenplatte (42) befestigt ist, um den unbeweglichen Arm (3) an der Schnittstellenplatte (42) biegesteif zu befestigen.

18. Zange nach einem der Ansprüche 10, 12 und 15 bis 17 und in Verbindung mit Anspruch 7, **dadurch gekennzeichnet, dass** der Führungsschlitten (11'a) aufweist:
einen rechteckigen biegesteifen Rahmen (51), der auf parallele Weise an zwei sich gegen-überliegenden Flächen, vorzugsweise die langen Flächen, von zwei Führungsstützen (23) durchquert ist, die auf biegesteife Weise an der Schnittstellenplatte (42) befestigt, beabstandet und parallel und an ihren Enden auf Absätzen in Translation geführt sind, wobei die Absätze mit dem Rahmen (51) verbunden sind, wobei mindestens eine Leiste (52) mit den Stützen (23) fest verbunden ist und selbst mit der Stange (29) eines linearen Betätigungsgeräts (11'b) von der Art eines Arbeitszylinders parallel mit den Stützen (23) und sich unter ihnen erstreckend verbunden ist, und deren Zylin-der (27) am Rahmen (51) des Schlittens (11') befestigt ist, wobei der Rahmen (51) auf direkte Weise oder mittels einer biegesteifen Zwischenstütze an dem Geberarm oder an einem biegesteifen Fuß befestigt ist oder auf umgekehrte Weise,
wobei der Rahmen (51) auf biegesteife Weise an der ersten Fläche (43) der Schnittstellenplatte (42) befestigt ist und die unbewegliche Teilanordnung, die aus den Stützen (23) und die Leiste oder Leisten (52) besteht, auf direkte Weise oder mittels einer biegesteifen Zwischenstütze an dem Geberarm oder an einem biegesteifen Fuß derart befestigt ist, dass das Betätigungsgerät (11'b) dazu geeignet ist, das Anlegen und das Hinterdrehen zu steuern, wobei mindestens eine Führungsstütze (23) von zwei entgegengesetzt wirkenden schneckenförmigen Federn umgeben ist, wobei jede Feder an einem Ende an dem Rahmen (51) und an dem anderen Ende an mindestens einer der Leisten (52) gestützt ist, an der Fläche, die der anderen Feder gegenüberliegt, oder
wobei das Betätigungsgerät (11'b) ein Pneumatikzylinder ist, der zwei Kammern mit druckbeaufschlagtem Gas einerseits und andererseits einen Kolben aufweist, der auf biegesteife Weise mittels der Stange (29) mit mindestens einer der Leisten (52) verbunden ist, um die zwei sich entgegengesetzt wirkenden elastischen Ausgleichseinrichtungen auszubilden.
